# EUROPEAN PATENT APPLICATION

(11) **EP 3 439 424 A1**
(43) Date of publication of application: **06.02.2019**
(21) Application number: 17773550.3
(22) Date of filing: 24.01.2017
(51) Int. Cl.: H04W 88/04, H04W 84/00

(54) **RELAY DEVICE, TERMINAL DEVICE, AND COMMUNICATION METHOD**

(30) Priority: 31.03.2016 JP 2016072459
(71) Applicant: Sony Corporation, Tokyo 108-0075 (JP)
(72) Inventor: SAITO, Shin, Tokyo 108-0075 (JP); TERAOKA, Fumio, Yokohama-shi Kanagawa 223-8522 (JP)
(74) Representative: Witte, Weller & Partner Patentanwälte mbB
(86) International application number: PCT/JP2017/002222
(87) International publication number: WO 2017/169000

(57) **Abstract**

[Object] To provide a structure for realizing efficiency of information processing on a relay node.

[Solution] A relay device includes: a storage unit configured to store a first conversion table of address information; and a control unit configured to convert and relay transmission destination information or transmission source information of a packet transmitted and received between an upstream node of a connection destination and a downstream node of a subordinate on a basis of the first conversion table stored in the storage unit.

## Description

### Technical Field

The present disclosure relates to a relay device, a terminal device, and a communication method.

### Background Art

In a cellular network, a relay device called a relay node has been designed. The relay node is located between a base station and a user terminal and has a function of relaying wireless communication. For example, a standard related to the relay node in 3GPP has been examined in the following Non-Patent Literature 1.

### Citation List

### Non-Patent Literature

Non-Patent Literature 1: 3GPP TS 36.300 Release 12 V12.8.0 (2016-01) Evolved Universal Terrestrial Radio Access (E-UTRA) and Evolved Universal Terrestrial Radio Access Network (E-UTRAN); Overall description; Stage 2

### Disclosure of Invention

### Technical Problem

The technology proposed in the foregoing Non-Patent Literature 1 was only recently proposed and it is difficult to say that the technology is sufficient as a technology for utilizing a relay node. For example, it is one technology in which efficiency of information processing on a relay node is insufficient.

### Solution to Problem

According to the present disclosure, there is provided a relay device including: a storage unit configured to store a first conversion table of address information; and a control unit configured to convert and relay transmission destination information or transmission source information of a packet transmitted and received between an upstream node of a connection destination and a downstream node of a subordinate on a basis of the first conversion table stored in the storage unit.

In addition, according to the present disclosure, there is provided a terminal device including a control unit configured to transmit a message requesting an upstream node which converts transmission destination information or transmission source information of a packet to be relayed, on a basis of a stored first conversion table of address information, to register the first conversion table.

In addition, according to the present disclosure, there is provided a communication method including: storing a first conversion table of address information; and converting and relaying, by a processor, transmission destination information or transmission source information of a packet transmitted and received between an upstream node of a connection destination and a downstream node of a subordinate on a basis of the stored first conversion table.

In addition, according to the present disclosure, there is provided a communication method including transmitting, by a processor, a message requesting an upstream node which converts transmission destination information or transmission source information of a packet to be relayed, on a basis of a stored first conversion table of address information, to register the first conversion table.

### Advantageous Effects of Invention

According to the present disclosure, as described above, it is possible to provide a structure for realizing efficiency of information processing on a relay node. Note that the effects described above are not necessarily limitative. With or in the place of the above effects, there may be achieved any one of the effects described in this specification or other effects that may be grasped from this specification.

### Brief Description of Drawings

FIG. 1 is a diagram illustrating an example of a schematic configuration of a system according to an embodiment of the present disclosure.
FIG. 2 is a block diagram illustrating an example of a configuration of the UE according to the embodiment.
FIG. 3 is a block diagram illustrating an example of a configuration of the RN according to the embodiment.
FIG. 4 is a block diagram illustrating an example of a configuration of a DeNB according to the embodiment.
FIG. 5 is a block diagram illustrating an example of a configuration of a core network node according to the embodiment.
FIG 6 is a sequence diagram illustrating an example of a flow of a connection process performed in the system according to the embodiment.
FIG 7 is a sequence diagram illustrating an example of a flow of a connection process performed in the system according to the embodiment.
FIG. 8 is a sequence diagram illustrating an example of a flow of a connection process performed in the system according to the embodiment.
FIG. 9 is a sequence diagram illustrating an example of a flow of a connection process performed in the system according to the embodiment.
FIG. 10 is a sequence diagram illustrating an example of a flow of a connection process performed in the system according to the embodiment.
FIG. 11 is a sequence diagram illustrating an example of a flow of a connection process performed in the system according to the embodiment.
FIG. 12 is a sequence diagram illustrating an example of a flow of a connection process performed in the system according to the embodiment.
FIG. 13 is a diagram illustrating an example of content of a packet header transmitted and received by each node for communication by the UE according to the embodiment.
FIG. 14 is a diagram illustrating an example of content of a packet header transmitted and received by each node for communication by the UE according to the embodiment.
FIG. 15 is a diagram illustrating an example of content of a packet header transmitted and received by each node for communication by the UE according to the embodiment.
FIG. 16 is a diagram illustrating an example of content of a packet header transmitted and received by each node for communication by the UE according to the embodiment.
FIG. 17 is a diagram illustrating an example of content of a packet header transmitted and received by each node for communication by the UE according to the embodiment.
FIG 18 is a diagram illustrating an example of content of a packet header transmitted and received by each node for communication by the UE according to the embodiment.
FIG. 19 is a sequence diagram illustrating an example of a flow of a handover process performed in the system according to the embodiment.
FIG 20 is a sequence diagram illustrating an example of a flow of a handover process performed in the system according to the embodiment.
FIG 21 is a sequence diagram illustrating an example of a flow of a process of maintaining an address conversion table entry performed in the system according to the embodiment.
FIG. 22 is a diagram illustrating an example of an architecture in a next-generation network.
FIG. 23 is a diagram illustrating an example of an architecture in a next-generation network.
FIG. 24 is a diagram illustrating an example of a protocol stack in an RN according to the embodiment.
FIG. 25 is a diagram illustrating an example of a protocol stack in communication between UE and a server on a PDN through the RN according to the embodiment.
FIG. 26 is a block diagram illustrating an example of a schematic configuration of a server.
FIG. 27 is a block diagram illustrating a first example of a schematic configuration of an eNB.
FIG. 28 is a block diagram illustrating a second example of the schematic configuration of the eNB.
FIG. 29 is a block diagram illustrating an example of a schematic configuration of a smartphone.
FIG. 30 is a block diagram illustrating an example of a schematic configuration of a car navigation device.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

In addition, in the present specification and the drawings, different reference numerals are given to nodes that have substantially the same functional configurations to distinguish the nodes from each other. For example, a plurality of nodes that have substantially the same functional configurations are distinguished from each other like a UE 1, a UE 2, and a UE 3, as necessary. However, in a case where it is not necessary to distinguish a plurality of nodes that have substantially the same functional configurations from each other, reference numerals are omitted. For example, in a case where it is not particularly necessary to distinguish the UE 1, the UE 2, and the UE 3 from each other, the UE 1, the UE 2, and the UE 3 are simply referred to as the UEs. The same applies to other nodes such as P-GWs, S-GWs, MMEs, eNBs, and RNs included in a cellular network.

Note that the description will be made in the following order.
1. Introduction
2. Configuration example
2.1. Configuration example of system
2.2. Configuration example of UE
2.3. Configuration example of RN
2.4. Configuration example of DeNB
2.5. Configuration example of core network node
3. Technical features
3.1. Connection process
3.2. Communication process
3.3. Handover process
3.4. Management of address conversion table entry
3.5. Modification examples
3.6. Supplement
4. Use case
5. Application examples
6. Conclusion

### <<1. Introduction>>

In addition, Table 1 is a table in which existing mobility support protocols are summarized. The mobility support protocols can be classified in terms of two viewpoints. The first viewpoint is a viewpoint regarding which of a (node mobility) protocol that realizes movement of a node alone and a (network mobility: NEMO) protocol that realizes movement of a node group (network) a mobility support protocol is. The second viewpoint is a viewpoint regarding which of a (host-based global mobility) protocol, in which a moving node (or a moving router) relates to signaling for movement management and a moving range is the entire Internet, and a (network-based localized mobility) protocol in which a moving node (or a moving router) does not relate to signaling for movement management and the moving range is only a limited range a mobility support protocol is.

A proposed protocol according to the embodiment is a protocol in which NEMO and a moving node are not related to signaling for movement management and a moving range is only a limited range.

**[Table 1]**

| | Node Mobility | Network Mobility (NEMO) |
|---|---|---|
| Host-Based | Mobile IPv4[1] | NEMO Basic Support Protocol[2] |
| Global Mobility | Mobile IPv6[3] | NEMO Extensions for MIPv4[4] |
| Network-Based | PMIPv6[5] | N-PMIPv6[6] |
| Localized Mobility | PMIPv4[7] | N-NEM0[8] |
| | IPv4 Support for PMIPv6[9] | P-NEMO[10] |
| | | PNEMO[11] |
| | | PMIPv6-NEMO[12] |

Note that the respective protocols in Table 1 are described in detail in the following documents:
[1] C. Perkins. IP Mobility Support for IPv4, Revised, November 2010. RFC 5944.
[2] V. Devarapalli, R. Wakikawa, A. Petrescu, and P. Thubert. Network Mobility (NEMO) Basic Support Protocol, January 2005. RFC 3963.
[3] C. Perkins, D. Johnson, and J. Arkko. Mobility Support in IPv6, July 2011. RFC 6275.
[4] K. Lueng, G. Dommety, V. Narayanan, and A. Petrescu. Network Mobility (NEMO) Extensions for Mobile IPv4, April 2008. RFC 5177.
[5] S. Gundavelli, K. Lueng, V. Devarapalli, K. Chowdhury, and B. Patil. Proxy Mobile IPv6, August 2008. RFC 5213.
[6] I. Soto, C.J. Bernardos, M. Calderon, A. Banchs, and A. Azcorra. Nemo-Enabled Localized Mobility Support for Internet Access in Automotive Scenarios. IEEE Communications Magazine, Vol. 47, No. 5, pp. 152-159, 2009.
[7] K. Lueng, G. Dommety, P. Yegani, and K. Chowdhury. WiMAX Forum / 3GPP2 Proxy Mobile IPv4, February 2010. RFC 5563.
[8] Z. Yan, S. Zhang, H. Zhou, H. Zhang, and I. You. Network Mobility Support in PMIPv6 Network. In Proceedings of 3rd International Conference on Ubiquitous and Future Networks (ICUFN2011), 2011.
[9] R. Wakikawa and S. Gundavelli. IPv4 Support for Proxy Mobile IPv6, May 2010. RFC 5844.
[10] J. H. Lee, T. Ernst, and N. Chilamlurti. Performance Analysis of PMIPv6-Based NEtwork MObility for Intelligent Transportation Systems. IEEE Transactions on Vehicular Technology, Vol. 61, No. 1, January 2012.
[11] T. Arita and F. Teraoka. PNEMO: A Network-Based Localized Mobility Management Protocol for Mobile Networks. Journal of Information Processing, Vol. 20, No. 2, February 2012.
[12] X. Zhou, J. Korhonen, C. Williams, S. Gundavelli, and CJ. Bernardos. Prefix Delegation Support for Proxy Mobile IPv6, March 2014. RFC 7148.

### <<2. Configuration example>>

### <2. 1. Configuration example of system>

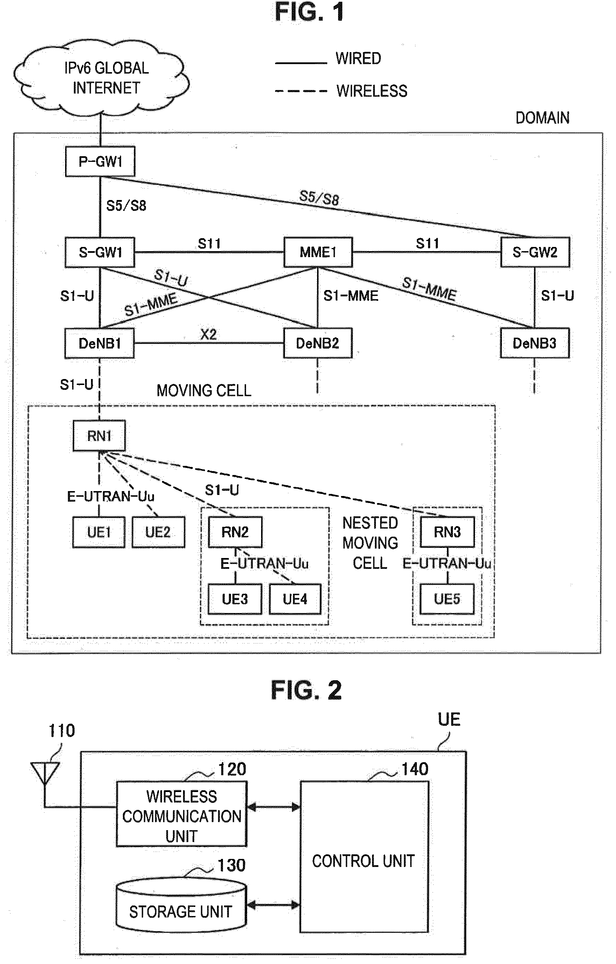

FIG. 1 is a diagram illustrating an example of a schematic configuration of a system according to an embodiment of the present disclosure. As illustrated in FIG. 1, the system according to the embodiment includes a packet data network (PDN)-gateway (P-GW), a serving-gateway (S-GW), a mobility management entity (MME), a donor evolved node B (DeNB), a relay-node (RN), and a user equipment (UE).

A UE is a terminal device. An RN is a relay device that relays communication between an upstream node such as a DeNB and a downstream node such as a UE. An RN operates as a UE in some cases. A DeNB is a base station to which an RN is connected. The S-GW is a gateway that transmits user data. The P-GW is a gateway that services as a contact point between a core network and an external PDN and is a communication control device that performs assignment of an IP address or the like. The MME performs movement management of the UE, authentication, setting of a transfer route of user data, and the like.

Additionally, the system according to the embodiment can include nodes such as an eNB, a home subscriber server (HSS), and a policy and charging rules function (PCRF). An eNB is a base station to which a UE is connected. An HSS is an entity that manages user information. A PCRF is an entity that decides a policy control and charging control rule such as QoS.

A solid line connecting nodes indicates wired connection and a broken line indicates wireless connection. As illustrated in FIG 1, a P-GW is connected to an IPv6 global Internet (that is, a PDN). In addition, a P-GW and an S-GW are connected by an S5/S8 interface. In addition, an S-GW and an MME are connected by an S11 interface. In addition, an S-GW and a DeNB are connected by an S1-U interface. In addition, an MME and a DeNB are connected by an S1-MME interface. In addition, DeNBs are connected by an X2 interface. In addition, a DeNB and an RN are connected by an S1-U interface. In addition, an RN and a UE are connected by an E-UTRAN-Uu interface. In addition, RNs are connected by an S1-U interface.

A cell formed by an RN can be referred to as a moving cell or a virtual cell. In FIG. 1, a moving cell is represented by a rectangle indicated by a broken line. Like a moving cell formed by an RN 2 and a moving cell formed by an RN 3, a structure in which a moving cell is included in another moving cell is referred to as a nested structure. Further, a moving cell of a side included in a nested structure, for example, a moving cell formed by the RN 2 or the RN 3, is also referred to as a nested moving cell.

In addition, a direction closer to the PDN is also referred to as an upstream side and a side closer to a UE is referred to as a downstream side. For example, an RN 1 is an upstream node to the RN 2, and a UE 3 and a UE 4 are downstream nodes to the RN 2.

The proposed protocol can operate in a domain (network range) of a mobile phone network, for example, as illustrated in FIG. 1. It is a matter of course that the domain may be another network configuration.

Hereinafter, notation of an IPv6 address used in the system according to the embodiment will be described.

An IPv6 address of a downstream interface of a P-GW is represented by IP^{D}_{PGW}. The IPv6 address is allocated in advance and is unchanged.

IPv6 addresses of upstream and downstream interfaces of an S-GW are represented by IP^{U}_{SGW} and IP^{D}_{SGW}. The IPv6 addresses are allocated in advance and are unchanged.

IPv6 addresses of upstream and downstream interfaces of a DeNB are represented by IP^{U}_{DeNB} and IP^{D}_{DeNB}. The IPv6 addresses are allocated in advance and are unchanged. In addition, 64 high-order bits (prefix) of an IP^{D}_{DeNB} are represented by Pref^{D}_{DeNB}.

An IPv6 address for connection with an upstream DeNB by an S1-U interface in a case where an RN operates as an eNB is represented by IP^{U}_{RN}. Here, 64 high-order bits (prefix) of IP^{U}_{RN} are equal to Pref^{D}_{DeNB}. In addition, 64 low-order bits (interface ID) of IP^{U}_{RN} are equal to ifid^{U}_{RN}. ifid^{U}_{RN} is allocated in advance and is unchanged.

An IPv6 used by an application on an RN in a case where the RN operates as a UE is represented by IP^{UE}_{RN}. Here, 64 high-order bits (prefix) of IP^{UE}_{RN} are represented by Pref^{UE}_{RN} and 64 low-order bits (interface ID) are represented by ifid^{UE}_{RN}. When the RN is powered on and is connected to an LTE network for the first time, Pref^{UE}_{RN} and ifid^{UE}_{RN} are allocated and are not changed until power-off.

An IPv6 prefix (/64) allocated to a downstream moving cell in a case where an RN operates a moving router is represented by Pref^{D}_{RN}. When the RN is powered on and is connected to an LTE network for the first time, Pref^{D}_{RN} is allocated and is not changed until power-off. An IPv6 address used at the time of communication with a device inside a downstream moving cell in a case where the RN operates as a moving router is represented by IP^{D}_{RN}. Here, 64 high-order bits (prefix) of IP^{D}_{RN} are equal to Pref^{D}_{RN}. Here, 64 low-order bits of IP^{D}_{RN} are represented by ifid^{D}_{RN}. ifid^{D}_{RN} is allocated in advance and is unchanged.

An IP address of a UE is represented by IP_{UE}. Here, 64 high-order bits (prefix) of IP_{UE} are represented by Pref_{UE} and 64 low-order bits (interface ID) are represented by ifid_{UE}.

### <2.2. Configuration example of UE>

Next, an example of a configuration of the UE according to the embodiment of the present disclosure will be described with reference to FIG. 2. FIG. 2 is a block diagram illustrating an example of the configuration of the UE according to the embodiment of the present disclosure. Referring to FIG. 2, the UE includes an antenna unit 110, a wireless communication unit 120, a storage unit 130, and a control unit 140.

### (1) Antenna unit 110

The antenna unit 110 releases a signal output from the wireless communication unit 120 as electric waves into a space. In addition, the antenna unit 110 converts the electric waves in the space into a signal and outputs the signal to the wireless communication unit 120.

### (2) Wireless communication unit 120

The wireless communication unit 120 transmits and receives signals. The wireless communication unit 120 receives a downlink signal from the eNB or the RN and transmits an uplink signal to the eNB or the RN.

### (3) Storage unit 130

The storage unit 130 temporarily or permanently stores a program and various kinds of data for operations of the UE.

### (4) Control unit 140

The control unit 140 provides various functions of the UE. The UE operates on the basis of control by the control unit 140. An operation of the UE based on the control by the control unit 140 will be described in detail below.

### <2.3. Configuration example of RN>

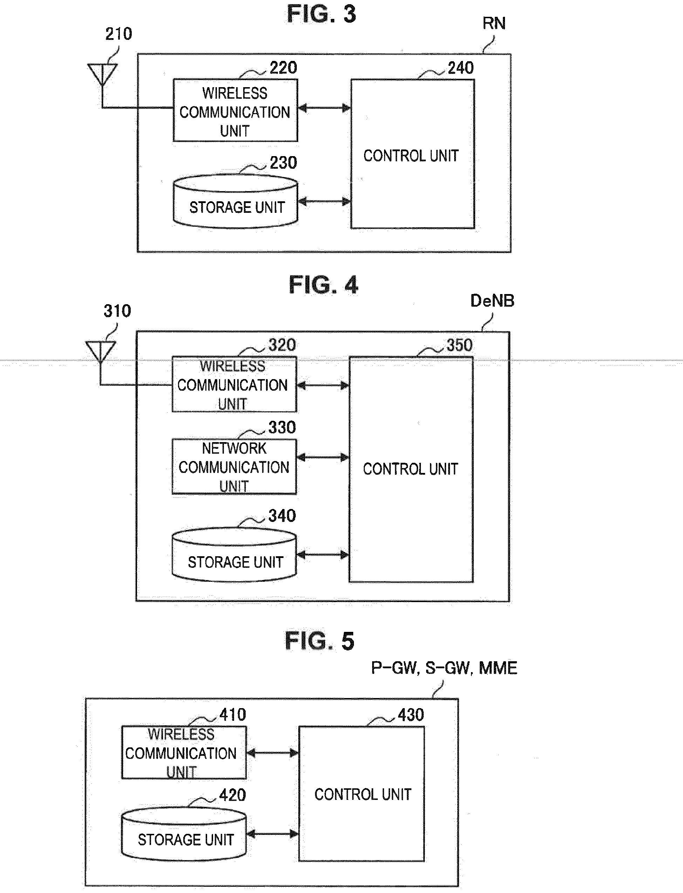

Next, an example of a configuration of the RN according to the embodiment of the present disclosure will be described with reference to FIG. 3. FIG. 3 is a block diagram illustrating an example of the configuration of the RN according to the embodiment of the present disclosure. Referring to FIG. 3, the RN includes an antenna unit 210, a wireless communication unit 220, a storage unit 230, and a control unit 240.

### (1) Antenna unit 210

The antenna unit 210 releases a signal output from the wireless communication unit 220 as electric waves into a space. In addition, the antenna unit 210 converts the electric waves in the space into a signal and outputs the signal to the wireless communication unit 220.

### (2) Wireless communication unit 220

The wireless communication unit 220 transmits and receives signals. For example, the wireless communication unit 220 receives a downlink signal from an upstream DeNB or another RN to relay the downlink signal to a downstream UE or RN. In addition, for example, the wireless communication unit 220 receives an uplink signal from a downstream UE or RN to relay the uplink signal to an upstream DeNB or another RN.

### (3) Storage unit 230

The storage unit 230 temporarily or permanently stores a program and various kinds of data for operations of the RN.

### (4) Control unit 240

The control unit 240 provides various functions of the RN. The RN operates on the basis of control by the control unit 240. An operation of the RN based on the control by the control unit 240 will be described in detail below.

### <2.4. Configuration example of DeNB>

Next, an example of a configuration of the DeNB according to the embodiment of the present disclosure will be described with reference to FIG. 4.

FIG 4 is a block diagram illustrating an example of the configuration of the DeNB according to the embodiment of the present disclosure. Referring to FIG. 4, the DeNB includes an antenna unit 310, a wireless communication unit 320, a network communication unit 330, a storage unit 340, and a control unit 350.

### (1) Antenna unit 310

The antenna unit 310 releases a signal output from the wireless communication unit 320 as electric waves into a space. In addition, the antenna unit 310 converts the electric waves in the space into a signal and outputs the signal to the wireless communication unit 320.

### (2) Wireless communication unit 320

The wireless communication unit 320 transmits and receives signals. For example, the wireless communication unit 320 transmits a downlink signal to a downstream UE or RN and receives an uplink signal from a downstream UE or RN.

### (3) Network communication unit 330

The network communication unit 330 transmits and receives information. For example, the network communication unit 330 transmits information to other nodes and receives information from the other nodes. For example, the other nodes include other DeNBs and core network nodes.

### (4) Storage unit 340

The storage unit 340 temporarily or permanently stores a program and various kinds of data for operations of the DeNB.

### (5) Control unit 350

The control unit 350 provides various functions of the DeNB. The DeNB operates on the basis of control by the control unit 350. An operation of the DeNB based on the control by the control unit 350 will be described in detail below.

### <2.5. Configuration example of core network node>

Next, an example of a configuration of a core network node according to an embodiment of the present disclosure will be described with reference to FIG. 5. Here, the core network node includes, for example, a P-GW, an S-GW, an MME, and the like. FIG. 5 is a block diagram illustrating the example of the configuration of the core network node according to the embodiment of the present disclosure. Referring to FIG. 5, the core network node includes a network communication unit 410, a storage unit 420, and a control unit 430.

### (1) Network communication unit 410

The network communication unit 410 transmits and receives information. For example, the network communication unit 410 transmits information to another node and receives information from still another node. For example, the other nodes include another core network node, the PDN, and the DeNB.

### (2) Storage unit 420

The storage unit 420 temporarily or permanently store various kinds of data and a program for operating the core network node.

### (3) Control unit 430

The control unit 430 provides various functions of the core network node. The core network node operates on the basis of control by the control unit 430. An operation of the core network node based on the control by the control unit 430 will be described in detail below.

### <<3. Technical features>>

### <3. 1. Connection process>

First, technical features related to a connection process in the system according to the embodiment will be described. Here, the connection process is a process of connecting a UE or an RN to a DeNB or an RN.

### - Routing table

Each node (for example, a DeNB, an S-GW, and a P-GW) from a base station to the P-GW stores a routing table in which transmission destination information is associated with a transfer destination. For example, the routing table includes an entry in which a terminal IP address (that is, a destination IP address) is associated with a GTP tunnel of a transfer destination. Each node relays a received packet using an appropriate GTP tunnel on the basis of the routing table.

For example, examples of the routing table which can be stored by each node are shown below.

### [Table 2A]

**Table 2A: Routing table stored by P-GW I**

| Terminal IPv6 address | Transfer destination |
|---|---|
| Pref^{UE}_{RN1} | GTP_{SGW1} |
| Pref^{D}_{RN1} | GTP_{SGW1} |
| ... | ... |
| default | Global Internet |

### [Table 2B]

**Table 2B: Routing table stored bv S-GW 1**

| Terminal IPv6 address | Transfer destination |
|---|---|
| Pref^{UE}_{RN1} | GTP_{DeNB1} |
| Pref^{D}_{RN1} | GTP_{DeNB1} |
| ... | ... |
| default | IP^{D}_{PGW1} |

### [Table 2C]

**Table 2C: Routing table stored by DeNB 1**

| Terminal IPv6 address | Transfer destination |
|---|---|
| Pref^{UE}_{RN1} | GTP_{RN1} |
| Pref^{D}_{RN1} | GTP_{RN1} |
| ... | ... |
| default | I P^{D}_{SGW1} |

### - Management Table

An MME stores a management table in which identification information of a node (a UE or an RN) attached to a network, address information, and address information of an upstream node (that is, a node of a connection destination) of the node are associated with each other. The MME can ascertain all the RNs and the UEs connected to a moving cell in accordance with the management table.

For example, an example of the management table stored by an MME 1 is shown below.

### [Table 3]

**Table 3: management table stored by MME 1**

| ID | IPv6 address | Upstream node |
|---|---|---|
| ID_{RN1} | IP^{UE}_{RN1} | I P^{D}_{DeNB1} |
| ID_{UE1} | IP_{UE1} | I P^{D}_{RN1} |
| ID_{UE2} | I P_{UE2} | IP^{D}_{RN1} |
| I D_{RN2} | IP^{UE}_{RN2} | IP^{D}_{RN1} |
| I D_{UE3} | IP_{UE3} | IP^{D}_{RN2} |
| ID_{UE4} | IP_{UE4} | I P^{D}_{RN2} |
| ID_{RN3} | IP^{UE}_{RN3} | I P^{D}_{RN1} |
| I D_{UE5} | I P_{UE5} | IP^{D}_{RN3} |

### - Conversion Table

An RN stores a conversion table (a first conversion table) of address information. The conversion table includes information in which address information of a downstream node is associated with address information of the RN corresponding to the downstream node. Note that the address information is information including an IP address and/or a port number. Here, the IP address is, for example, an IPv6 address. The RN can aggregate packets destined for the downstream node of the RN to the RN by using the conversion table.

A P-GW also stores a conversion table (a second conversion table) of address information. The conversion table includes information in which address information of a most downstream node (that is, a UE or an RN operating as a UE) is associated with address information of the RN corresponding to the most downstream node. The P-GW can aggregate packets destined for the downstream node of the RN to the RN by using the conversion table.

A UE transmits a message requesting registration of the conversion table in an RN which is an upstream node of a connection destination. In addition, in a case where there is a P-GW or an RN upstream, an RN also transmits the message requesting registration of the conversion table to the RN. The message is also referred to as a network address translation (NAT) registration request below. The RN and the P-GW can appropriately update the conversion tables on the basis of the message. An NAT registration response (NAT registration Ack) is given as a response to the NAT registration request.

For example, examples of the conversion table which can be stored by each RN are shown below.

### [Table 4]

**Table 4: address conversion table stored by P-GW 1**

| Downstream IP | Downstream Pt | Upstream IP | Upstream Pt | Timer |
|---|---|---|---|---|
| IP^{UE}_{RN1} | Pt1^{RN1}_{UE2} | IP_{UE2} | Pt1_{UE2} | ... |
| IP^{UE}_{RN1} | Pt1^{RN1}_{UE4} | IP_{UE4} | Pt1_{UE4} | ... |
| IP^{UE}_{RN1} | Pt1^{RN1}_{RN3} | IP_{RN3} | Pt1_{RN3} | ... |
| IP^{UE}_{RN1} | Pt1^{RN1}_{UE5} | IP_{UE5} | Pt1_{UE5} | ... |
| IP^{UE}_{RN1} | Pt2^{RN1}_{UE1} | IP_{UE1} | Pt2_{UE21} | ... |
| IP^{UE}_{RN1} | Pt2^{RN1}_{UE2} | IP_{UE2} | Pt2_{UE2} | ... |
| IP^{UE}_{RN1} | Pt2^{RN1}_{RN2} | IP^{UE}_{RN2} | Pt2_{RN2} | ... |
| IP^{UE}_{RN1} | Pt2^{RN2}_{UE3} | IP_{UE3} | Pt2_{UE3} | ... |
| IP^{UE}_{RN1} | Pt2^{RN2}_{UE4} | IP_{UE4} | Pt2_{UE4} | ... |
| IP^{UE}_{RN1} | Pt2^{RN1}_{RN3} | IP^{UE}_{RN3} | Pt2_{RN3} | ... |
| IP^{UE}_{RN1} | Pt2^{RN3}_{UE5} | IP_{UE5} | Pt2_{UE5} | ... |

### [Table 5]

**Table 5: address conversion table stored by RN 1**

| Downstream IP | Downstream Pt | Upstream IP | Upstream Pt | Timer |
|---|---|---|---|---|
| IP_{UE2} | Pt1_{UE2} | IP^{UE}_{RN1} | Pt1^{RN1}_{UE2} | ... |
| IP^{UE}_{RN2} | Pt1^{RN2}_{UE4} | IP^{UE}_{RN1} | P t1 ^{RN1} _{UE4} | ... |
| IP^{UE}_{RN3} | Pt1_{RN3} | IP^{UE}_{RN1} | Pt1^{RN1}_{RN3} | ... |
| IP^{UE}_{RN3} | Pt1^{RN31}_{UE5} | IP^{UE}_{RN1} | pt1 ^{RN1} _{U E 5} | ... |
| IP_{UE1} | P t1 _{UE1} | I P ^{U E} _{RN1} | Pt1^{RN1}_{UE1} | ... |
| IP_{UE1} | Pt2_{UE1} | IP^{UE}_{RN1} | Pt2^{RN1}_{UE1} | ... |
| IP_{UE2} | Pt2_{UE2} | IP^{UE}_{RN1} | Pt2^{RN1}_{UE2} | ... |
| IP^{UE}_{RN2} | Pt1_{RN2} | IP^{UE}_{RN1} | Pt1^{RN1}_{URN2} | ... |
| IP^{UE}_{RN2} | Pt2_{RN2} | IP^{UE}_{RN1} | Pt2^{RN1}_{RN2} | ... |
| IP^{UE}_{RN2} | Pt1^{RN2}_{UE3} | IP^{UE}_{RN1} | Pt1^{RN1}_{UE3} | ... |
| IP^{UE}_{RN2} | Pt2^{RN2}_{UE3} | IP^{UE}_{RN1} | Pt2^{RN1}_{UE3} | ... |
| IP^{UE}_{RN2} | Pt2^{RN2}_{UE4} | IP^{UE}_{RN1} | Pt2^{RN1}_{UE4} | ... |
| IP^{UE}_{RN3} | Pt2_{RN3} | IP^{UE}_{RN1} | Pt2^{RN1}_{RN3} | ... |
| IP^{UE}_{RN3} | Pt2^{RN3}_{UE5} | IP^{UE}_{RN1} | Pt2^{RN3}_{UE5} | ... |

### [Table 6]

**Table 6: address conversion table stored by RN 2**

| Downstream IP | Downstream Pt | Upstream IP | Upstream Pt | Timer |
|---|---|---|---|---|
| IP_{UE4} | Pt1_{UE4} | IP^{UE}_{RN2} | Pt1^{RN2}_{UE4} | ... |
| IP_{UE3} | Pt1_{UE3} | IP^{UE}_{RN2} | Pt1^{RN2}_{UE3} | ... |
| IP_{UE3} | Pt2_{UE3} | IP^{UE}_{RN2} | Pt1^{RN2}_{UE3} | ... |
| IP_{UE4} | Pt2_{UE4} | IP^{UE}_{RN2} | Pt2^{RN2}_{UE4} | ... |

### [Table 7]

**Table 7: address conversion table stored by RN 3**

| Downstream IP | Downstream Pt | Upstream IP | Upstream Pt | Timer |
|---|---|---|---|---|
| IP_{UE5} | Pt1_{UE5} | IP^{UE}_{RN3} | Pt1^{RN3}_{UE5} | ... |
| IP_{UE5} | Pt2_{UE5} | IP^{UE}_{RN3} | Pt2^{RN3}_{UE5} | ... |

### - DHCP-PD

In a case where an IP address is not acquired, the RN receives allocation of a prefix portion of the IP address from the P-GW. The same applies to a case where the RN is connected to a DeNB and a case where the RN is connected to a moving cell. The RN may perform DHCP-prefix delegation (PD) between the P-GWs. Thus, the RN can receive the allocation of the prefix. Note that DHCP-PD is described in detail in "O. Troan and R. Droms. IPv6 Prefix Options for Dynamic Host Configuration Protocol (DHCP) version 6, December 2003. RFC 3633."

The RN can allocate a prefix (for example, IPv6 Prefix/64) which is a part of the allocated prefix (for example, IPv6 Prefix/56) to subordinate nodes. Thus, since the RN and the subordinate nodes of the RN have the common prefix, the conversion table can be simplified.

### - Information indicating placement

The RN transmits information indicating placement of a moving cell formed by the RN. The information is, for example, information indicating that the RN is most upstream (for example, MCTOP Flag=ON) or information indicating that the RN forms a nested moving cell (for example, MCNEST Flag=ON). The information is included in, for example, an attach request to be transmitted.

### - Transmission of attach request

The RN controls a transmission timing of the attach request related to the attached downstream node. For example, the RN collectively transmits the attach request related to at least one attached downstream node to the upstream node. The method of controlling the transmission timing is arbitrary. For example, periodically transmitting the attach request each predetermined time or transmitting the attach request after waiting a predetermined time from reception of the attach request from the downstream node can be considered. Thus, the RN can transmit the attach request related to a plurality of nodes at the same time rather than transmitting the attach request whenever the node is connected to the downstream side of the RN. Thus, a communication load of the network is reduced.

Hereinafter, a flow of the connection process will be described in detail assuming the network configuration example illustrated in FIG. 1.

### (1. 1) Connection process to DeNB by RN which has not acquired IPv6 address

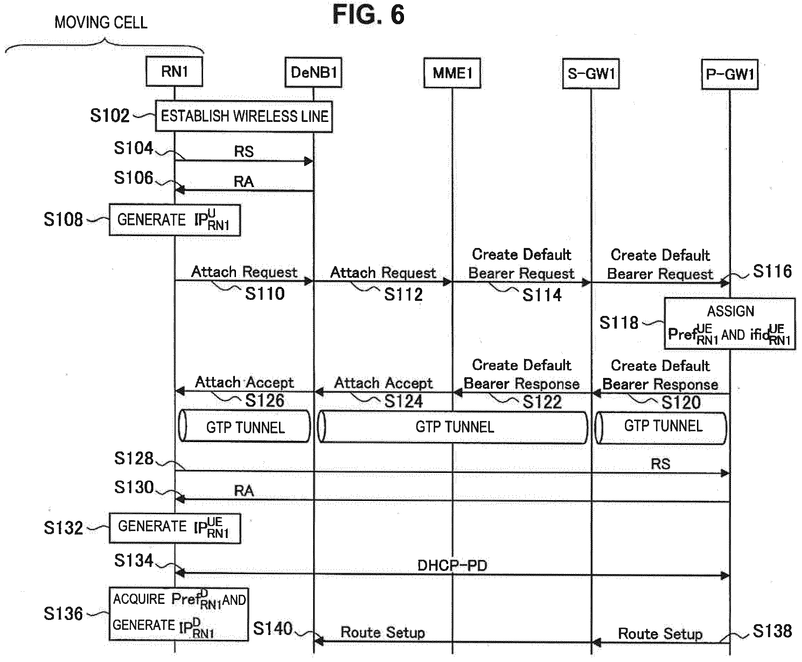

In this section, a connection process to a DeNB by an RN which has not acquired an IPv6 address will be described. For example, a case where the RN 1 near the DeNB 1 is powered on will be assumed. An example of a connection process to the DeNB 1 by the RN 1 which has not acquired the IPv6 address in this case will be described with reference to FIG. 6.

FIG. 6 is a sequence diagram illustrating an example of a flow of a connection process performed in the system according to the embodiment. In this sequence, the RN 1, the DeNB 1, the MME 1, the S-GW 1, and the P-GW 1 are involved. The RN 1 forms a moving cell.

First, the RN 1 establishes a wireless line with the DeNB 1 (step S102).

Subsequently, the RN 1 transmits a router solicitation (RS) destined for all the outer multicast addresses of a link local (step S104).

Subsequently, the DeNB 1 receives the RS and transmits a router advertisement (RA) destined for an IPv6 address of the link local of the RN 1 (step S106). The RA includes Pref^{D}_{DeNB1} which is a prefix of the IPv6 address allocated to the downstream interface of the DeNB 1.

Subsequently, the RN 1 receives the RA and generates IP^{U}_{RN1} which is an IPv6 address from Pref^{D}_{DeNB1} and ifid^{U}_{RN1} which is an ID of an upstream interface of the RN 1 (step S108). IP^{U}_{RN1} is used for the RN 1 to establish a general packet ratio service (GPRS) tunneling protocol (GTP) tunnel with the DeNB 1.

Subsequently, the RN 1 transmits an attach request to the DeNB 1 (step S110). The attach request includes ID_{RN1} which is an identifier of the RN 1, IP^{U}_{RN1}, and information indicating that the RN 1 is the most upstream RN of the moving cell (for example, MCTOP Flag=ON).

Subsequently, when the attach request is received, the DeNB 1 adds IP^{D}_{DeNB1} which is an IPv6 address of a downstream interface of the DeNB 1 to the received attach request and transfers the attach request to the MME 1 (step S112).

Subsequently, when the attach request is received, the MME 1 transmits a create default bearer request to the S-GW 1 (step S114). The create default bearer request includes ID_{RN1}, IP^{U}_{RN1}, IP^{D}_{DeNB1}, and information indicating that the RN1 is the most upstream RN of the moving cell (for example, MCTOP Flag=ON).

Subsequently, when the create default bearer request is received, the S-GW 1 transfers the create default bearer request to the P-GW 1 (step S116)

Subsequently, when the create default bearer request is received, the P-GW 1 allocates Pref^{UE}_{RN1} and ifid^{UE}_{RN1} (step S118). Specifically, the P-GW 1 allocates Pref^{UE}_{RN1} which is an IPv6 prefix of /64 from an IPv6 address space which the P-GW 1 has. In addition, the P-GW 1 generates ifid^{UE}_{RN1} which is an interface ID when the RN 1 operates as a UE. In addition, the P-GW 1 configures a GTP tunnel with the S-GW 1 and registers a transfer destination of Pref^{UE}_{RN1} in the routing table in association with the GTP tunnel (which is equivalent to the first entry of Table 2A). Endpoints of the GTP tunnel are IP^{D}_{PGW1} which is an IPv6 address of a downstream interface of the P-GW1 and IP^{U}_{SGW1} which is an IPv6 address of an upstream interface of the S-GW 1.

Subsequently, the P-GW 1 transmits a create default bearer response to the S-GW 1 (step S120). The create default bearer response includes ID_{RN1}, IP^{D}_{PGW1}, Pref^{UE}_{RN1}, ifid^{UE}_{RN1}, and IP^{D}_{DeNB1}.

Subsequently, when the create default bearer response is received, the S-GW 1 adds IP^{D}_{SGW1} to the received create default bearer response and transfers the create default bearer response to the MME 1 (step S122). In addition, the S-GW 1 configures a GTP tunnel with the P-GW 1. Endpoints of the GTP tunnel are IP^{U}_{SGW1} and IP^{D}_{PGW1}. Further, the S-GW 1 configures a GTP tunnel with the DeNB 1 and registers a transfer destination of Pref^{UE}_{RN1} in the routing table in association with the GTP tunnel (which is equivalent to the first entry of Table 2B). Endpoints of the GTP tunnel are IP^{D}_{SGW1} which is an IPv6 address of a downstream interface of the S-GW 1 and IP^{U}_{DeNB1} which is an IPv6 address of an upstream interface of the DeNB 1.

Subsequently, when the create default bearer response is received, the MME 1 registers the RN 1 in the management table of the MME 1 (which is equivalent to the first entry of Table 3). Subsequently, the MME 1 transmits an attach accept to the DeNB 1 (step S124). The attach accept includes ID_{RN1}, IP^{D}_{SGW1}, Pref^{UE}_{RN1}, and ifid^{UE}_{RN1}.

Subsequently, when the attach accept is received, the DeNB 1 transfers the attach accept to the RN 1 (step S126). In addition, the DeNB 1 configures a GTP tunnel with the S-GW 1. Endpoints of the GTP tunnel are IP^{U}_{DeNB1} which is an IPv6 address of an upstream interface of the DeNB 1 and IP^{D}_{SGW1} which is an IPv6 address of a downstream interface of the S-GW 1. Further, the DeNB 1 configures a GTP tunnel with the RN 1 and registers the transfer destination of Pref^{UE}_{RN1} in the routing table in association with the GTP tunnel (which is equivalent to the first entry of Table 2C). Endpoints of the GTP tunnel are IP^{D}_{DeNB1} which is an IPv6 address of a downstream interface of the DeNB 1 and IP^{U}_{RN1} which is an IPv6 address of an upstream interface of the RN 1. The RN 1 receives the attach accept to acquire ifid^{UE}_{RN1}.

As a result of the foregoing process, the GTP tunnels are configured between the P-GW1 and the S-GW 1, between the S-GW 1 and the DeNB 1, and between the DeNB 1 and the RN 1.

Subsequently, the RN 1 transmits a router solicitation (RS) to the P-GW 1 in conformity with the regulations of IPv6 in order to acquire IP^{UE}_{RN1} which is an IPv6 address used to operate as a UE (step S128).

Subsequently, the P-GW 1 receives the RS and returns a router advertisement (RA) to the RN 1 (step S130). The RA includes Pref^{UE}_{RN1}.

Subsequently, the RN 1 receives the RA to acquire Pref^{UE}_{RN1}. Then, the RN 1 generates IP^{UE}_{RN1} from the prefix and ifid^{UE}_{RN1} (step S132). Here, IP^{UE}_{RN1} is an IPv6 address used in a case where an application on the RN 1 performs communication.

Subsequently, the RN 1 performs the DHCP-PD with the P-GW 1 in order to acquire a prefix of a downstream interface (step S134). Thus, the P-GW1 allocates the prefix Pref^{D}_{RN1} to the RN 1.

As a result of the DHCP-PD, the RN 1 acquires Pref^{D}_{RN1}. Then, the RN 1 generates an IPv6 address IP^{D}_{RN1} from Pref^{D}_{RN1} and ifid^{D}_{RN1} which is the interface ID of the downstream interface and allocates IP^{D}_{RN1} to the downstream interface (step S136).

On the other hand, the P-GW 1 registers a route of Pref^{D}_{RN1} in the routing table in association with the tunnel to the S-GW 1 (which is equivalent to the second entry of Table 2A). Subsequently, the P-GW 1 transmits a route setup to the S-GW1 (step S138). The route setup includes Pref^{UE}_{RN1} and Pref^{D}_{RN1}.

Subsequently, when the route setup is received, the S-GW 1 registers a route of Pref^{D}_{RN1} in the routing table in association with the tunnel to the DeNB 1 (which is equivalent to the second entry of Table 2B). Subsequently, the S-GW 1 transfers the route setup to the DeNB 1 (step S140). When the route setup is received, the DeNB 1 registers the route of Pref^{D}_{RN1} in the routing table in association with the tunnel to the RN 1 (which is equivalent to the second entry of Table 2C).

As a result of the above-described process, the P-GW 1, the S-GW 1, and the DeNB 1 store the routing tables shown in Tables 2A, 2B, and 2C, respectively. On the other hand, the MME 1 stores the management table shown in Table 3. The MME ascertains all the RNs connected to the moving cell with reference to the management table.

### (1. 2) Connection process to RN by UE which has not acquired IPv6 address

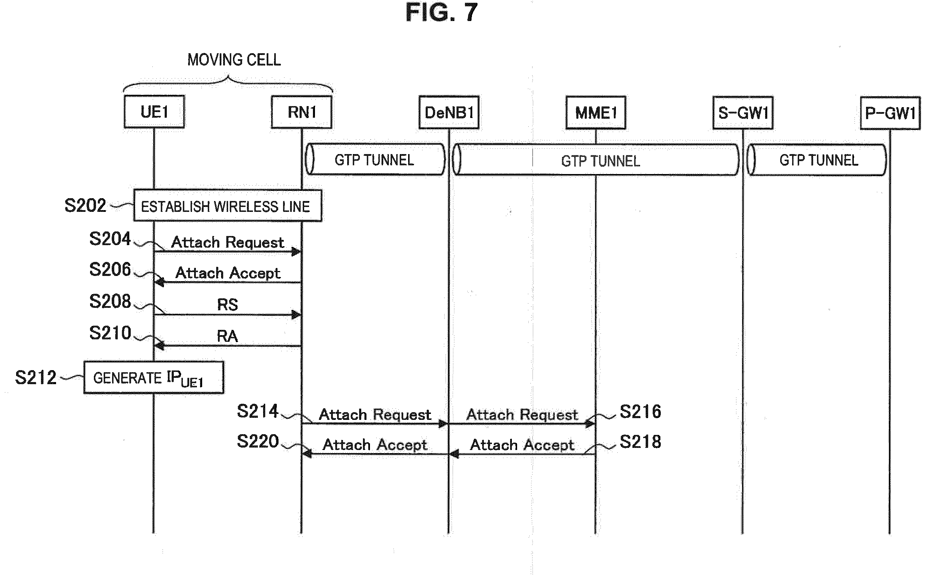

In this section, a connection process to an RN by a UE which has not acquired an IPv6 address will be described. For example, a case where the UE 1 near the RN 1 is powered on after the process described in the foregoing section (1.1.) will be assumed. An example of a connection process to the RN 1 by the UE 1 which has not acquired the IPv6 address in this case will be described with reference to FIG. 7.

FIG. 7 is a sequence diagram illustrating an example of a flow of the connection process performed in the system according to the embodiment. In this sequence, the UE 1, the RN 1, the DeNB 1, and the MME 1 are involved. As illustrated in FIG. 7, the GTP tunnels are configured between the P-GW 1 and the S-GW 1, between the S-GW 1 and the DeNB 1, and between the DeNB 1 and the RN 1.

First, the UE 1 establishes a wireless line with the RN 1 (step S202).

Subsequently, the UE 1 transmits an attach request to the RN 1 (step S204). The attach request includes ID_{UE1} which is an identifier of the UE 1. The RN 1 generates ifid_{UE1} which is an interface ID of the UE 1 from IDUE1 using, for example, a hash function.

Subsequently, the RN 1 transmits the attach accept to the UE 1 (step S206). The attach accept includes ifid_{UE1}.

Subsequently, the UE 1 receives the attach accept and acquires ifid_{UE1}. Subsequently, the UE 1 transmits the RS to the RN 1 (step S208).

Subsequently, when the RS is received, the RN 1 transmits the RA including Pref^{D}_{RN1} to the UE 1 (step S210).

Subsequently, the UE 1 receives the RA and generates IP_{UE1} which is an IPv6 address of the UE 1 from Pref^{D}_{RN1} and ifid_{UE1} (step S212).

Subsequently, the RN 1 waits for a certain time (for example, 1 second) and collectively transmits the attach requests related to the UEs connected to the downstream side of the RN 1 to the DeNB 1 (step S214). Thus, the RN 1 can transmit the attach request related to the plurality of UEs at the same time rather than transmitting the attach request whenever the UE is connected to the downstream side of the RN 1. The attach request includes an identifier (for example, ID_{UE1}) of the UE connected to the RN 1, an IPv6 address (for example, IP_{UE1}), IP^{D}_{RN1}, and information indicating connection of the UE to the moving cell (for example, MC Flag=ON).

Subsequently, when the attach request is received, the DeNB 1 transfers the attach request to the MME 1 (step S216).

Subsequently, when the attach request is received, the MME 1 registers information regarding the UE (for example, the UE 1) connected to the downstream side of the RN 1 in a mapping table (which is equivalent to the second entry of Table 3) and transmits an attach accept to the DeNB 1 (step S218). The attach accept includes the identifier (for example, ID_{UE1}) of the UE connected to the RN 1.

Subsequently, when the attach accept is received, the DeNB 1 transmits the attach accept to the RN 1 (step S220).

As the result of the above-described process, the routing tables stored by the P-GW1, the S-GW1, and the DeNB 1 are not changed. That is, an amount of information of the routing tables stored by the DeNB, the S-GW, and the P-GW does not depend on the number of UEs inside the moving cell. On the other hand, the MME ascertains all the UEs connected to the moving cell with reference to the management table.

### (1. 3) Connection process to RN by UE which has acquired IPv6 address

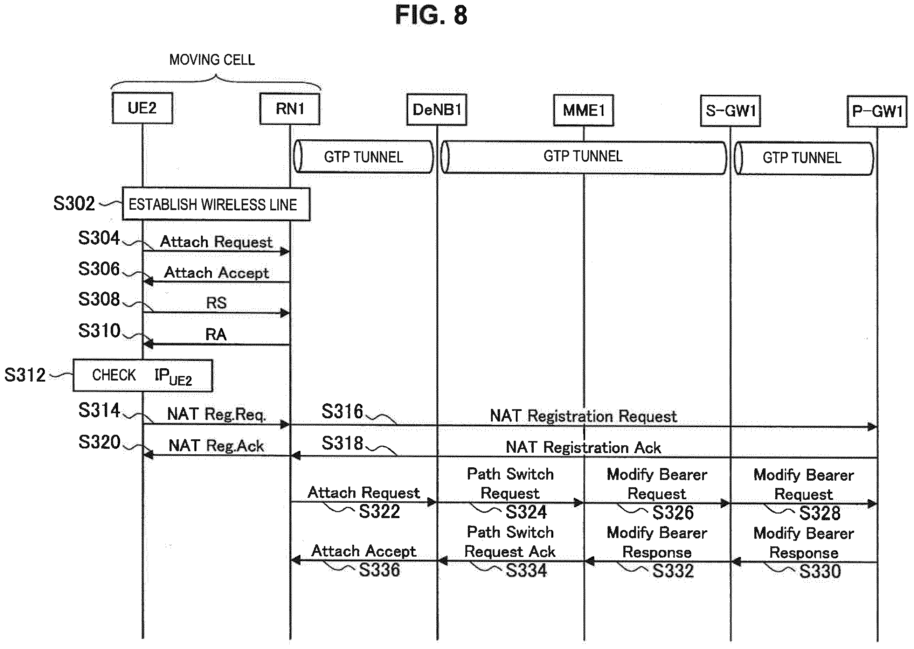

In this section, a connection process to the RN by the UE which has acquired the IPv6 address will be described. For example, a case where the UE 2 connected to another eNB is moved to a moving cell provided by the RN 1 will be assumed. More specifically, a case where the UE 2 having an IPv6 address such as IP_{UE2} is connected to the RN 1 after the process described in the foregoing section (1. 2) will be assumed. Note that IP_{UE2} does not belong to Pref^{D}_{RN1}. An example of a connection process to the RN 1 by the UE 2 which has acquired the IPv6 address in this case, will be described with reference to FIG. 8.

FIG. 8 is a sequence diagram illustrating an example of a flow of a connection process performed in the system according to the embodiment. In this sequence, the UE 2, the RN 1, the DeNB 1, the MME 1, the S-GW 1, and the P-GW 1 are involved. As illustrated in FIG. 8, the GTP tunnels are configured between the P-GW 1 and the S-GW1, between the S-GW 1 and the DeNB1, and between the DeNB 1 and the RN1.

First, the UE 2 establishes a wireless line with the RN 1 (step S302).

Subsequently, the UE 2 transmits an attach request to the RN 1 (step S304). The attach request includes ID_{UE2} which is an identifier of the UE 2 and IP_{UE2}. When the attach request is received, the RN 1 detects that the UE 2 having the IPv6 address has been moved from another eNB or the RN to the downstream side to the RN 1 since IP_{UE2} does not belong to Pref^{D}_{RN1}. Accordingly, the RN 1 generates an IPv6 address IP2^{D}_{RN1} from Pref_{UE2} which is the prefix of IP_{UE2} and ifid^{D}_{RN1} and allocates the IPv6 address IP2^{D}_{RN1} to a downstream interface.

Subsequently, the RN 1 transmits an attach accept to the UE 2 (step S306). The attach accept includes ifid_{UE2} which is the interface ID of IP_{UE2}.

Subsequently, the UE 2 receives the attach accept to acquire ifid_{UE2}. Subsequently, the UE 2 transmits the RS to the RN 1 (step S308).

Subsequently, when the RS is received, the RN 1 transmits the RA to the UE 2 (step S310). The RA includes Pref_{UE2} and information indicating connection to a moving cell (for example, MC Flag=ON).

Subsequently, the UE 2 receiving the RA generates IP_{UE2} from Pref_{UE2} and ifidUE2 and confirms that IP_{UE2} can be continuously used (step S312).

Subsequently, the UE 2 transmits an NAT registration request to the RN 1 (step S314). The NAT registration request includes IP_{UE2} and a list of port numbers which are currently used for communication (herein, to facilitate the description, the number of ports during the communication is 1 and Pt1_{UE2} represents the port).

Subsequently, when the NAT registration request is received, the RN 1 allocates a new port number Pt1^{RN1}_{UE2} to Pt1_{UE2} and adds a new entry (the first entry of Table 5) to the address conversion table of the RN 1. Subsequently, the RN 1 transmits the NAT registration request to the P-GW 1 (step S316). The NAT registration request includes IP_{UE2}, Pt1_{UE2}, IP^{UE}_{RN1}, and Pt1^{RN1}_{UE2}.

Subsequently, when the NAT registration request is received, the P-GW 1 adds a new entry (the first entry of Table 4) to the address conversion table of the P-GW 1. Subsequently, the P-GW 1 transmits the NAT registration response to the RN 1 (step S318).

Subsequently, when the NAT registration response is received, the RN 1 transmits the NAT registration response to the UE 2 (step S320).

Subsequently, after transmission of the RA, the RN 1 waits for a certain time (for example, 1 second) and collectively transmits the attach requests related to the UEs connected to the downstream side of the RN 1 to the DeNB 1 (step S322). Thus, the RN 1 can transmit the attach request related to the plurality of UEs at the same time rather than transmitting the attach request whenever the UE is connected to the downstream side of the RN 1. The attach request includes an identifier (for example, ID_{UE2}) of the UE connected to the RN 1, an IPv6 address (for example, IP_{UE2}), IP^{D}_{RN1}, and information indicating connection to the moving cell (for example, MC Flag=ON).

Subsequently, when the attach request is received, the DeNB 1 transmits a path switch request to the MME 1 (step S324). The path switch request includes an identifier (for example, ID_{UE2}) of the UE connected to the RN 1, an IPv6 address (for example, IP_{UE2}), IP^{D}_{RN1}, and information indicating connection to a moving cell (for example, MC Flag=ON).

Subsequently, since the UE (for example, the UE 2) already has the IPv6 address connected to the NR 1, the MME 1 already stores an entry related to the UE in the management table of the MME 1. When the path switch request is received, the MME 1 updates a field of an upstream node of the entry (for example, the entry of the UE 2 (the third entry of Table 3)) of the UE connected to the downstream side of the RN 1 in the management table of the MME 1. Subsequently, the MME 1 transmits a modify bearer request to the S-GW 1 (step S326). The modify bearer request includes an ID and an IPv6 address (for example, ID_{UE2} and IP_{UE2}) of the UE connected to the downstream side of the RN 1.

Subsequently, when the modify bearer request is received, the S-GW 1 transmits the modify bearer request to the P-GW 1 (step S328).

Subsequently, when the modify bearer request is received and when the GTP tunnel is established with the UE (for example, the UE 2) connected to the downstream side of the RN 1, the P-GW 1 releases the GTP tunnel. Subsequently, the P-GW 1 transmits a modify bearer response to the S-GW 1 (step S330). The modify bearer response includes an identifier (for example, ID_{UE2}) of the UE connected to the downstream side of the RN 1.

Subsequently, when the modify bearer response is received, the S-GW 1 transfers the modify bearer response to the MME 1 (step S332).

Subsequently, when the modify bearer request is received, the MME 1 transmits a path switch request response (path switch request Ack) to the DeNB 1 (step S334). The path switch request response includes an identifier (for example, ID_{UE2}) of the UE connected to the downstream side of the RN 1.

Subsequently, when the path switch request response is received, the DeNB 1 transmits an attach accept to the RN 1 (step S336). The attach accept includes an identifier (for example, ID_{UE2}) of the UE connected to the downstream side of the RN 1.

As a result of the above-described process, the routing tables stored by the P-GW 1, the S-GW 1, and the DeNB 1 are not changed. That is, an amount of information of the routing tables stored by the P-GW, the S-GW, and the DeNB does not depend on the number of UEs inside the moving cell. On the other hand, when the UE which has acquired the IPv6 address is connected to the moving cell, the same number of entries of the address conversion table as the number of ports during communication in the UE is added to the upstream RN and P-GW. The address conversion tables stored by the P-GW 1 and the RN 1 are shown in Tables 4 and 5, respectively. In addition, the MME 1 ascertains all the UEs connected to the moving cell with reference to the management table.

### (1. 4) Connection process to moving cell by RN which has not acquired IPv6 address

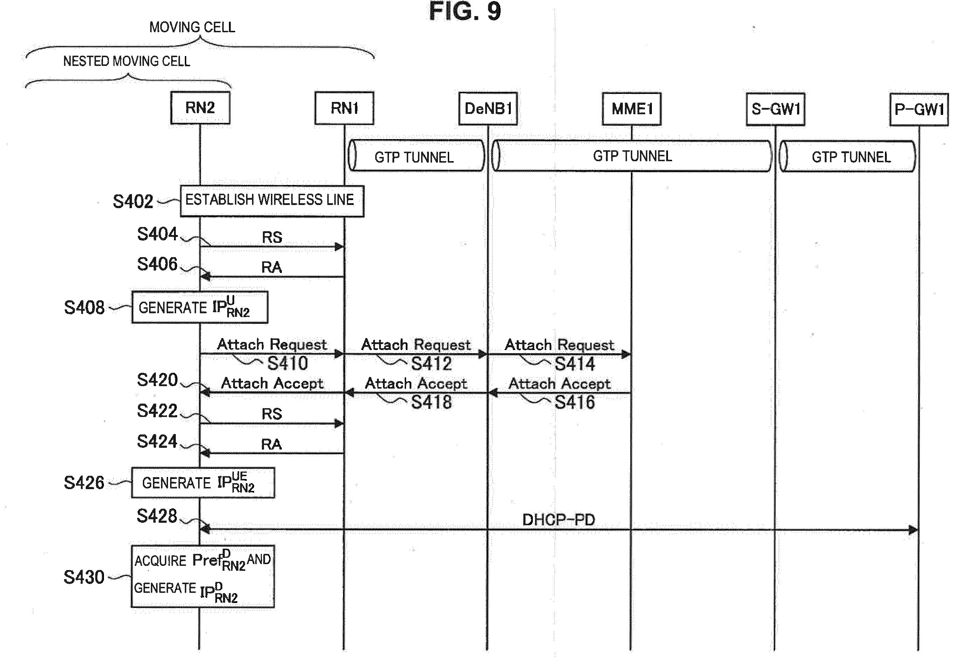

In this section, a connection process to a moving cell by an RN which has not acquired an IPv6 address will be described. For example, a case where the RN 2 near the RN 1 is powered on after the process described in the foregoing section (1.3.) will be assumed. An example of a connection process to a moving cell provided by the RN 1 by the RN 2 which has not acquired the IPv6 address in this case will be described with reference to FIG. 9.

FIG. 9 is a sequence diagram illustrating an example of a flow of a connection process performed in the system according to the embodiment. In this sequence, the URN 2, the RN 1, the DeNB 1, the MME 1, and the P-GW 1 are involved. As illustrated in FIG. 9, the GTP tunnels are configured between the P-GW 1 and the S-GW1, between the S-GW 1 and the DeNB1, and between the DeNB 1 and the RN1.

First, the RN 2 establishes a wireless line with the RN 1 (step S402).

Subsequently, the RN 2 transmits a RS destined for all the outer multicast addresses of a link local (step S404).

Subsequently, when the RS is received, the RN 1 transmits the RA destine for a link local address of the RN 2 (step S406). The RA includes Pref^{D}_{RN1} and information indicating that the RN 1 is inside the moving cell (for example, MC Flag=ON).

Subsequently, when the RA is received, the RN 2 generates IP^{U}_{RN2} which is an IPv6 address from Pref^{D}_{RN1} and ifid^{U}_{RN2} which is an ID of an upstream interface of the RN 2 (step S408). As will be described below, IP^{U}_{RN2} is equal to IP^{UE}_{RN2} which is an IPv6 address used by an application on the RN 2.

Subsequently, the RN 2 transmits an attach request to the RN 1 (step S410). The attach request includes ID_{RN2} which is an identifier of the RN 2, IP^{U}_{RN2}, and information indicating that the RN 2 is in a nested state (for example, MCNEST Flag=ON).

Subsequently, when the attach request is received, the RN 1 adds IP^{D}_{RN1} and transfers the attach request to the DeNB 1 (step S412).

Subsequently, when the attach request is received, the DeNB 1 transfers the attach request to the MME 1 (step S414).

Subsequently, when the attach request is received, the MME 1 registers information regarding the RN 2 in the management table (which is equivalent to the fourth entry of Table 3). Then, the MME 1 transmits an attach accept to the DeNB 1 (step S416). The attach accept includes ID_{RN2}.

Subsequently, when the attach accept is received, the DeNB 1 transmits the attach accept to the RN 1 (step S418).

Subsequently, when the attach accept is received, the RN 1 transfers the attach accept to the RN 2 (step S420). The attach accept includes ifid^{U}_{RN2}.

Subsequently, the RN 2 receives the attach accept to acquire ifid^{U}_{RN2}. Subsequently, the RN 2 transmits the RS to the RN 1 (step S422).

Subsequently, when the RS is received, the RN 1 transmits the RA to the RN 2 (step S424). The RA includes Pref^{D}_{RN1} and IP^{D}_{PGW1}.

Subsequently, when the RA is received, the RN 2 generates IP^{UE}_{RN2} from Pref^{D}_{RN1} and ifid^{U}_{RN2} (step S426). IP^{UE}_{RN2} is an IPv6 address used by an application when the RN 2 operates as a UE. As a result, IP^{U}_{RN2} is equal to IP^{UE}_{RN2}.

Subsequently, the RN 2 performs the DHCP-PD with the P-GW 1 in order to acquire a prefix of a downstream interface (step S428). At this time, information indicating that the RN 2 is in the nested state (for example, MCNEST Flag=ON) is transmitted to the P-GW 1. The P-GW 1 allocates PrefDRN2 as a prefix of a downstream interface of the RN 2. The routing information is not changed since the P-GW 1 knows that the RN 2 is in the nested state.

As a result of the DHCP-PD, the RN 2 acquires Pref^{D}_{RN2}. Then, the RN 2 generates IP^{D}_{RN2} from Pref^{D}_{RN2} and ifid^{D}_{RN2} which is the ID of the downstream interface and allocates IP^{D}_{RN2} to a downstream interface (step S430).

As a result of the above-described process, the routing tables stored by the P-GW 1, the S-GW 1, and the DeNB 1 are not changed. That is, an amount of information of the routing tables stored by the P-GW, the S-GW, and the DeNB does not depend on the number of nested RNs connected to the moving cell. On the other hand, the MME ascertains all the RNs connected to the moving cell with reference to the management table.

### (1. 5) Connection process to nested moving cell by UE which has not acquired IPv6 address

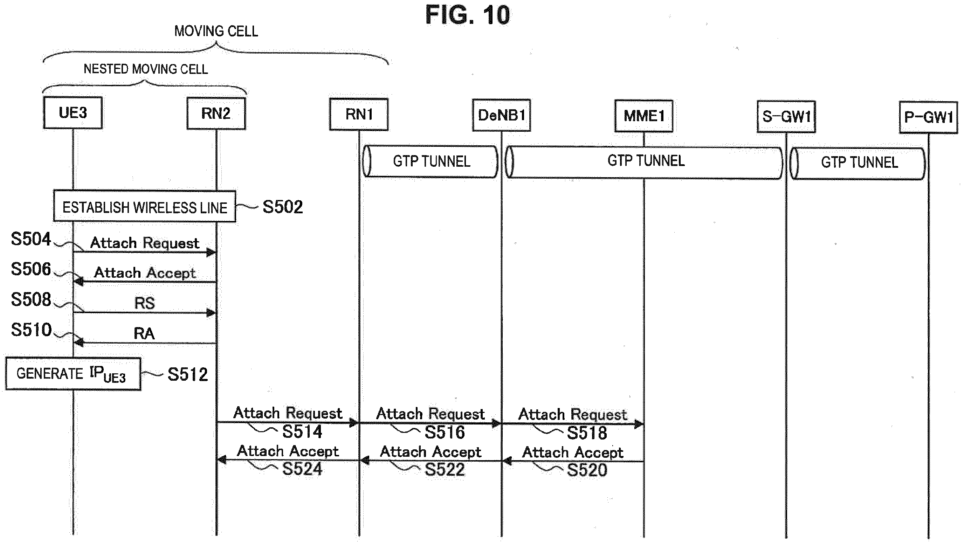

In this section, a connection process to a nested moving cell by a UE which has not acquired an IPv6 address will be described. For example, a case where the UE3 near the RN 2 is powered on after the process described in the foregoing section (1.4.) will be assumed. An example of a connection process to a nested moving cell provided by the RN 2 by the UE 3 which has not acquired the IPv6 address in this case will be described with reference to FIG. 10.

FIG. 10 is a sequence diagram illustrating an example of a flow of the connection process performed in the system according to the embodiment. In this sequence, the UE 3, the RN 2, the RN 1, the DeNB 1, and the MME 1 are involved. As illustrated in FIG. 10, the GTP tunnels are configured between the P-GW 1 and the S-GW 1, between the S-GW 1 and the DeNB 1, and between the DeNB 1 and the RN 1.

First, the UE 3 establishes a wireless line with the RN 2 (step S502).

Subsequently, the UE 3 transmits an attach request to the RN 2 (step S504). The attach request includes ID_{UE3} which is an identifier of the UE 3.

Subsequently, the RN 2 generates ifid_{UE3} from ID_{UE3} using, for example, a hash function and transmits an attach accept including ifid_{UE3} to the UE 3 (step S506).

Subsequently, the UE 3 receives the attach accept to acquire ifid_{UE3}. Subsequently, the UE 3 transmits the RS to the RN 2 (step S508).

Subsequently, when the RS is received, the RN 2 transmits the RA including Pref^{D}_{RN2} to the UE 3 (step S510).

Subsequently, the UE 3 receives the RA and generates IP_{UE3} which is an IPv6 address from Pref^{D}_{RN2} and ifid_{UE3} (step S512).

Subsequently, the RN 2 waits for a certain time (for example, 1 second) and collectively transmits the attach requests related to the UEs connected to the downstream side of the RN 2 to the RN 1 (step S514). Thus, the RN 2 can transmit the attach request related to the plurality of UEs at the same time rather than transmitting the attach request whenever the UE is connected to the downstream side of the RN 2. The attach request includes an identifier (for example, ID_{UE3}) of the UE connected to the RN 2, an IPv6 address (for example, IP_{UE3}), IP^{D}_{RN2}, and information indicating connection of the UE to the moving cell (for example, MC Flag=ON).

Subsequently, when the attach request is received, the RN 1 transfers the attach request to the DeNB 1 (step S516).

Subsequently, when the attach request is received, the DeNB 1 transfers the attach request to the MME 1 (step S518).

Subsequently, when the attach request is received, the MME 1 registers information regarding the UE (for example, the UE 3) connected to the downstream side of the RN 2 in a management table (which is equivalent to the fifth entry of Table 3) and transmits an attach accept to the DeNB 1 (step S520). The attach accept includes the identifier (for example, ID_{UE3}) of the UE connected to the RN 2.

Subsequently, when the attach accept is received, the DeNB 1 transmits the attach accept to the RN 1 (step S522).

Subsequently, when the attach accept is received, the RN 1 transmits the attach accept to the RN 2 (step S524).

As the result of the above-described process, the routing tables stored by the P-GW1, the S-GW1, and the DeNB 1 are not changed. That is, an amount of information of the routing tables stored by the DeNB, the S-GW, and the P-GW does not depend on the number of UEs inside the moving cell. On the other hand, the MME ascertains all the UEs connected to the moving cell with reference to the management table.

### (1. 6) Connection process to nested moving cell by UE which has acquired IPv6 address

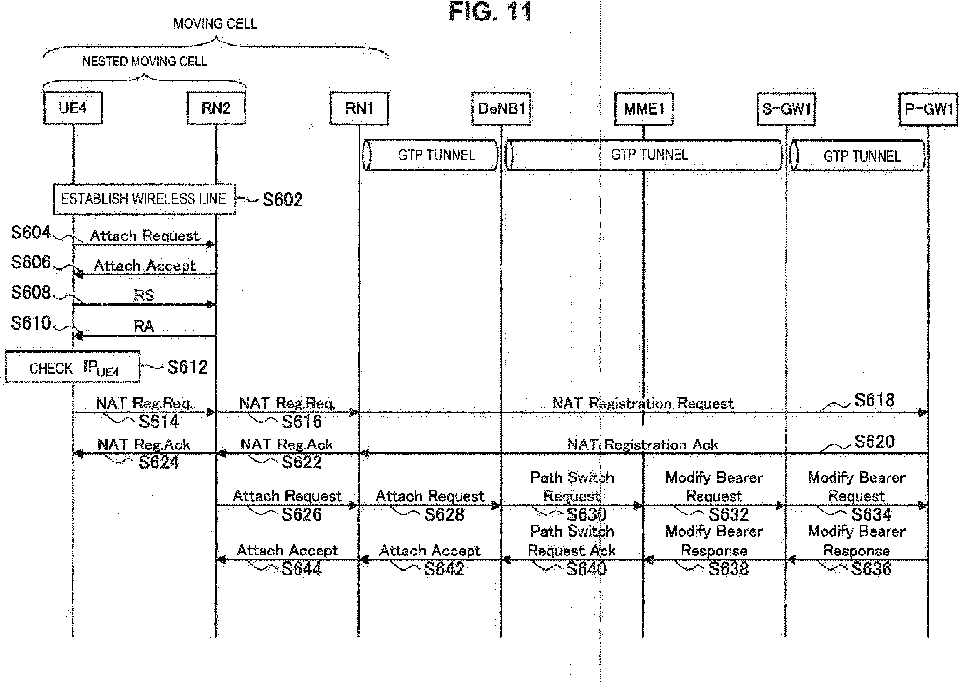

In this section, a connection process to a nested moving cell by the UE which has acquired the IPv6 address will be described. For example, a case where the UE 4 which obtains the IPv6 address IP_{UE4} and subordinate to an RN or another eNB has moved to a nested moving cell provided by the RN 2 after the process described in the foregoing section (1. 5) will be assumed. An example of a connection process to the nested moving cell provided by the RN 2 by the UE 4 which has acquired the IPv6 address in this case will be described with reference to FIG. 11.

FIG. 11 is a sequence diagram illustrating an example of a flow of a connection process performed in the system according to the embodiment. In this sequence, the UE 4, the RN 2, the RN 1, the DeNB 1, the MME 1, the S-GW 1, and the P-GW 1 are involved. As illustrated in FIG. 11, the GTP tunnels are configured between the P-GW 1 and the S-GW1, between the S-GW 1 and the DeNB1, and between the DeNB 1 and the RN1.

First, the UE 4 establishes a wireless line with the RN 2 (step S602).

Subsequently, the UE 4 transmits an attach request to the RN 2 (step S604). The attach request includes ID_{UE4} which is an identifier of the UE 4 and IP_{UE4}. When the attach request is received, the RN 2 detects that the UE 4 having the IPv6 address has been moved from another eNB or the RN to the downstream side to the RN 2 since IP_{UE4} does not belong to Pref^{D}_{RN2}. Accordingly, the RN 2 generates an IPv6 address IP2^{D}_{RN1} from Pref_{UE4} which is the prefix of IP_{UE2} and ifid^{D}_{RN2} which is the ID of a downstream interface of itself and allocates the IPv6 address IP2^{D}_{RN2} to the downstream interface.

Subsequently, the RN 2 transmits an attach accept to the UE 2 (step S606). The attach accept includes ifid_{UE4} which is an interface ID of IP_{UE4}, IP^{D}_{RN2}, and information indicating connection to the moving cell (for example, MC flag=ON).

Subsequently, the UE 4 receives the attach accept to acquire ifid_{UE4}. Subsequently, the UE 4 transmits the RS to the RN 4 (step S308).

Subsequently, when the RS is received, the RN 2 transmits the RA including Pref_{UE4} to the UE 4 (step S610).

Subsequently, when the RA is received, the UE 4 generates IP_{UE4} from Pref_{UE4} and ifid_{UE4} and confirms that IP_{UE4} can be continuously used (step S612).

Subsequently, the UE 4 recognizes the connection to the moving cell and transmits an NAT registration request to the RN 2 (step S614). The NAT registration request includes IP_{UE4} and a list of port numbers which are currently used for communication (herein, to facilitate the description, only one port Pt1_{UE4} is assumed to be used during the communication).

Subsequently, when the NAT registration request is received, the RN 2 allocates a new port number Pt1^{RN2}_{UE4} to Pt1_{UE4} and adds a new entry (the first entry of Table 6) to the address conversion table of the RN 2. Subsequently, the RN 2 transmits the NAT registration request to the RN 1 (step S6316). The NAT registration request includes IP_{UE4}, Pt1_{UE4}, IP^{UE}_{RN2}, and Pt1^{RN2}_{UE4}.

Subsequently, when the NAT registration request is received, the RN 1 allocates a new port number Pt1^{RN1}_{UE4} to Pt1^{RN2}_{UE4} and adds a new entry (the second entry of Table 5) to the address conversion table of the RN 1. Subsequently, the RN 1 transmits the NAT registration request to the P-GW 1 (step S618). The NAT registration request includes IP_{UE4}, Pt1_{UE4}, IP^{UE}_{RN1}, and Pt1^{RN1}_{UE4}.

Subsequently, when the NAT registration request is received, the P-GW 1 adds a new entry (the second entry of Table 4) to the address conversion table of the P-GW 1. Subsequently, the P-GW 1 transmits the NAT registration response to the RN 1 (step S620).

Subsequently, when the NAT registration response is received, the RN 1 transmits the NAT registration response to the RN 2 (step S622).

Subsequently, when the NAT registration response is received, the RN 2 transmits the NAT registration response to the UE 4 (step S624).

Subsequently, after transmission of the RA, the RN 2 waits for a certain time (for example, 1 second) and collectively transmits the attach requests related to the UEs connected to the downstream side of the RN 2 to the RN 1 (step S626). Thus, the RN 2 can transmit the attach request related to the plurality of UEs at the same time rather than transmitting the attach request whenever the UE is connected to the downstream side of the RN 2. The attach request includes an identifier (for example, ID_{UE4}) of the UE connected to the RN 2, an IPv6 address (for example, IP_{UE4}), IP^{D}_{RN2}, and information indicating UE connection to the moving cell (for example, MC Flag=ON).

Subsequently, when the attach request is received, the RN 1 transfers the attach request to the DeNB 1 (step S628).

Subsequently, when the attach request is received, the DeNB 1 transmits a path switch request to the MME 1 (step S630). The path switch request includes an identifier (for example, ID_{UE4}) of the UE connected to the RN 2, an IPv6 address (for example, IP_{UE4}), IP^{D}_{RN2}, and information indicating UE connection to a moving cell (for example, MC Flag=ON).

Here, since the UE which has moved to the downstream side of the RN 2 already has the IPv6 address, the MME 1 has already registered information regarding the UE which has moved in the management table. Accordingly, when the path switch request is received, the MME 1 changes a field of the upstream node of the entry (for example, an entry related to the UE 4 (the sixth entry of Table 3)) of the management table related to the UE connected to the RN 2 to IP^{D}_{RN2} and transmits a modify bearer request to the S-GW 1 (step S632). The modify bearer request includes the identifier (for example, ID_{UE4}) of the UE connected to the RN 2, the IPv6 address (for example, IP_{UE4}), and the information indicating the connection of the UE to the moving cell (for example, MC Flag=ON).

Subsequently, when the modify bearer request is received, the S-GW 1 transmits the modify bearer request to the P-GW 1 (step S634).

Subsequently, when the modify bearer request is received, the P-GW 1 performs a process of releasing the GTP tunnel in a case where the GTP tunnel related to the UE (for example, the UE 4) connected to the downstream side of the RN 2 is established. Then, the P-GW 1 transmits a modify bearer response to the S-GW 1 (step S636). The modify bearer response includes the identifier (for example, ID_{UE4}) of the UE which has moved to the downstream side of the RN 2.

Subsequently, when the modify bearer response is received, the S-GW 1 transfers the modify bearer response to the MME 1 (step S638).

Subsequently, when the modify bearer response is received, the MME 1 transmits a path switch request response to the DeNB 1 (step S640). The path switch request response includes the identifier (for example, ID_{UE4}) of the UE which has moved to the downstream side of the RN 2.

Subsequently, when the path switch request response is received, the DeNB 1 transmits an attach accept to the RN 1 (step S642). The attach accept includes an identifier (for example, ID_{UE4}) of the UE moved to the downstream side of the RN 2.

Subsequently, when the attach accept is received, the RN 1 transmits the attach accept to the RN 2 (step S644).

As a result of the above-described process, the routing tables stored by the P-GW 1, the S-GW 1, and the DeNB 1 are not changed. That is, an amount of information of the routing tables stored by the P-GW, the S-GW, and the DeNB does not depend on the number of UEs inside the moving cell. On the other hand, when the UE which has acquired the IPv6 address is connected to the nested moving cell, the same number of entries of the address conversion table as the number of ports during communication in the UE is added to the upstream RN and P-GW. In addition, the MME 1 ascertains all the UEs and RNs connected to the moving cell with reference to the management table.

### (1. 7) Connection process to moving cell by RN which has acquired IPv6 address

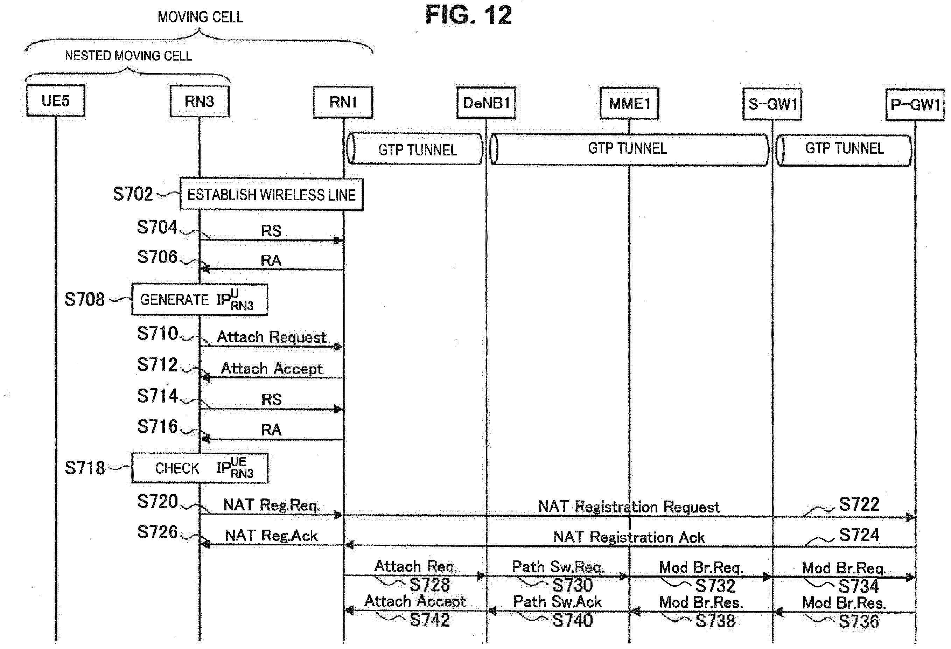

In this section, a connection process to a moving cell by the RN which has acquired the IPv6 address will be described. For example, a case where the RN 3 which obtains the IPv6 address and subordinate to an RN or another eNB has moved to a moving cell provided by the RN 1 after the process described in the foregoing section (1. 6) will be assumed. An example of a connection process to the moving cell provided by the RN 1 by the RN 3 which has acquired the IPv6 address in this case will be described with reference to FIG. 12.

Note that the RN 3 is assumed to have acquired IP^{UE}_{RN3} which is an IPv6 address used by an application and IP^{D}_{RN3} which is an IPv6 address of the downstream interface. In addition, a UE 5 is assumed to be connected to the further downstream side of the RN 3. The UE 5 is assumed to have IP_{UE5} as an IPv6 address. Since the UE 5 has already performed the connection process to the RN 3, the RN 3ascertains ID_{UE5} which is an identifier of the UE 5 and IP_{UE5} which is an IPv6 address.

FIG. 12 is a sequence diagram illustrating an example of a flow of a connection process performed in the system according to the embodiment. In this sequence, the RN 3, the RN 1, the DeNB 1, the MME 1, the S-GW 1, and the P-GW 1 are involved. As illustrated in FIG. 12, the GTP tunnels are configured between the P-GW 1 and the S-GW1, between the S-GW 1 and the DeNB1, and between the DeNB 1 and the RN1.

First, the RN 3 establishes a wireless line with the RN 1 (step S702).

Subsequently, the RN 3 transmits a RS destined for all the outer multicast addresses of a link local (step S704). The RS includes IP^{UE}_{RN3}.

Subsequently, when the RS is received, the RN 1 recognizes that the RN 3 already has IP^{UE}_{RN3} which is an IPv6 address and transmits the RA including Pref^{UE}_{RN3} which is a prefix of IP^{UE}_{RN3} and information indicating connection to the moving cell (for example, MC Flag=ON) to the RN 3 (step S706). In addition, the RN 1 generates IP3^{D}_{RN1} which is an IPv6 address from Pref^{UE}_{RN3} and ifid^{D}_{RN1} which is an ID of a downstream interface of the RN 1 and allocates IP3^{D}_{RN1} to the downstream interface.

Subsequently, the RN 3 receives the RA and generates IP^{U}_{RN3} which is an IPv6 address from Pref^{UE}_{RN3} and ifid^{U}_{RN3} which is an ID of an upstream interface of the RN 3 (step S708).

Subsequently, the RN 3 transmits an attach request to the RN 1 (step S710). The attach request includes ID_{RN3} which is an identifier of the RN 3 and IP^{UE}_{RN3}.

Subsequently, when the attach request is received, the RN 1 transmits an attach accept to the RN 3 (step S712). The attach accept includes ifid^{UE}_{RN3} which is an interface ID of IP^{UE}_{RN3}.

Subsequently, the RN 3 receives the attach accept to acquire ifid^{UE}_{RN3}. Subsequently, the RN 3 transmits the RS to the RN 1 (step S714).

Subsequently, when the RS is received, the RN 1 transmits the RA to the RN 3 (step S716). The RA includes Pref^{UE}_{RN3} which is the prefix of IP^{UE}_{RN3}.

Subsequently, when the RA is received, the RN 3 generates IP^{UE}_{RN3} from Pref^{UE}_{RN3} and ifid^{UE}_{RN3} and confirms that IP^{UE}_{RN3} can be continuously used (step S718).

Subsequently, the RN 3 transmits an NAT registration request to the RN 1 (step S720). The NAT registration request includes IP^{UE}_{RN3}, a port number (to facilitate the description, only one port number Pt1_{RN3} is assumed) used for communication by an application on the RN 3, IP_{UE5} and a list of port numbers which are used for communication by the UE 5 (to facilitate the description, only one port number Pt1_{UE5} is assumed).

Subsequently, when the NAT registration request is received, the RN 1 allocates Pt1^{RN1}_{RN3} and Pt1^{RN1}_{UE5} as new port numbers to Pt1_{RN3} and Pt1_{UE5} and adds new entries (the third and fourth entries of Table 5) to the address conversion table of the RN 1. Subsequently, the RN 1 transmits the NAT registration request to the P-GW 1 (step S722). The NAT registration request includes IP^{UE}_{RN3}, Pt1_{RN3}, IP^{UE}_{RN1}, Pt1^{RN1}_{RN3}, IP_{UE5}, Pt1_{UE5}, and Pt1^{RRN}_{UE5}.

Subsequently, when the NAT registration request is received, the P-GW 1 adds a new entry (the third entry and fourth entry of Table 4) to the address conversion table of the P-GW 1. Subsequently, the P-GW 1 transmits the NAT registration response to the RN 1 (step S724).

Subsequently, when the NAT registration response is received, the RN 1 transmits the NAT registration response to the RN 3 (step S726).

Subsequently, after transmission of the RA, the RN 1 waits for a certain time (for example, 1 second) and collectively transmits the attach requests related to the RNs and the UEs in a nested moving cell connected to the downstream side of the RN 1 to the DeNB 1 (step S728). Thus, the RN 1 can transmit the attach request related to the plurality of nested moving cells at the same time rather than transmitting the attach request whenever the nested moving cell is connected to the downstream side of the RN 1. The attach request includes an identifier (for example, ID_{RN3}. ID_{UE5}) of the RN and the UE in the nested moving cell connected to the RN 1, an IPv6 address (for example, IP^{UE}_{RN3}, IP_{UE5}), IP^{D}_{RN1}, and information indicating connection to the moving cell (for example, MC Flag=ON).

Subsequently, when the attach request is received, the DeNB 1 transfers a path switch request to the MME 1 (step S730). The path switch request includes an identifier (for example, ID_{RN3}, ID_{UE5}) of the UE and the RN in the nested moving cell connected to the RN 1, an IPv6 address (for example, IP^{UE}_{RN3}, IP_{UE5}), IP^{D}_{RN1}, and information indicating connection to a moving cell (for example, MC Flag=ON).

Here, since the RN and the UE which have moved to the downstream side of the RN 1 already have the IPv6 addresses, the MME 1 has already registered information regarding the RN which has moved and the UE connected to the nested moving cell in the management table. Accordingly, when the path switch request is received, the MME 1 updates fields of the upstream nodes of the management table entries (for example, the fields of the RN 3 and the UE 5 (the seventh and eighth entries of Table 3)) related to the RN and the UE inside the nested moving cell connected to the downstream side of the RN 1. Subsequently, the MME 1 transmits the modify bearer request to the S-GW 1 (step S732). The modify bearer request includes the identifiers (for example, ID_{RN3} and ID_{UE5}) of the RN and the UE inside the nested moving cell connected to the RN 1, the IPv6 addresses (for example, IP^{UE}_{RN3} and IP_{UE5}), and the information indicating the connection to the moving cell (for example, MC Flag=ON).

Subsequently, when the modify bearer request is received, the S-GW 1 transmits the modify bearer request to the P-GW 1 (step S734).

Subsequently, when the modify bearer request is received, the P-GW 1 performs a process of releasing the GTP tunnel in a case where the GTP tunnel related to the RN (for example, the RN 3) connected to the most upstream side of the nested moving cell connected to the downstream side of the RN 1. Subsequently, the P-GW 1 transmits a modify bearer response to the S-GW 1 (step S736). The modify bearer response includes the identifiers (for example, ID_{RN3} and ID_{UE5}) of the RN and the UE inside the nested moving cell connected to the downstream side of the RN 1.

Subsequently, when the modify bearer response is received, the S-GW 1 transfers the modify bearer response to the MME 1 (step S738).

Subsequently, when the modify bearer response is received, the MME 1 transmits a path switch request response to the DeNB 1 (step S740). The path switch request response includes the identifiers (for example, ID_{RN3} and ID_{UE5}) of the RN and the UE inside the nested moving cell connected to the downstream side of the RN 1.

Subsequently, when the path switch request response is received, the DeNB 1 transmits an attach accept to the RN 1 (step S742). The attach accept includes the identifiers (for example, ID_{RN3} and ID_{UE5}) of the RN and the UE inside the nested moving cell connected to the downstream side of the RN 1.

As the result of the above-described process, the routing tables stored by the P-GW 1, the S-GW 1, and the DeNB 1 are not changed. That is, an amount of information of the routing tables stored by the P-GW, the S-GW, and the DeNB does not depend on the numbers of RNs and UEs connected to the moving cell. On the other hand, when the moving cell which has acquired the address is connected as a nested moving cell to the moving cell, the same number of ports and the same number of address conversion table entries during the communication in the connected nested moving cell are added to the upstream RN and P-GW. In addition, the MME stores the entries related to all the RNs and the UEs connected to the moving cell.

### <3. 2. Communication process>

Hereinafter, technical features related to a communication process in the system according to the embodiment will be described. Here, the communication process is a process in which the RN or the UE completing the connection process communicates with an application on the Internet.

### - Address conversion

The RN converts and relays transmission destination information or transmission source information transmitted and received between an upstream node of a connection destination and a downstream node of a subordinate on the basis of the stored conversion table. Thus, the RN can aggregate packets destined for the downstream node of the RN to the RN.

More specifically, the RN converts the address information of the downstream node in the transmission destination information or the transmission source information included in a packet header. Note that the transmission source information includes, for example, a start-point IP address and a start-point port number and the transmission destination information includes, for example, an endpoint IP address and an endpoint port number. The RN identifies whether the packet to be relayed is a packet from an upstream node to a downstream node or a packet from the downstream node to the upstream node. For example, the packet can be identified on the basis of the transmission destination information. Then, the RN controls a relay process on the basis of the identification result.

For example, the RN converts transmission source information regarding a packet to be relayed from a downstream side to an upstream side from address information of the downstream node to address information of the RN corresponding to the downstream node. Specifically, the RN converts an IP address of the transmission source information of the packet from the downstream node to the upstream node into an IP address of the RN. In addition, the RN converts a port number of the transmission source information of the packet from the downstream node to the upstream node into a port number of the RN in accordance with an application operating a most downstream node (that is, the UE or the RN of the transmission source endpoint). Thus, a response to the packet transmitted from a downstream node connected to the RN can arrive at the RN.

For example, the RN converts transmission destination information regarding a packet to be relayed from an upstream side to a downstream side from address information of the RN corresponding to the downstream node to address information of the downstream node. Specifically, the RN converts an IP address of the transmission destination information of the packet from the upstream node to the downstream node into an IP address of the downstream node. In addition, the RN converts a port number of the transmission destination information of the packet from the upstream node to the downstream node into a port number of the downstream node in accordance with an application operating on a most downstream node (that is, the UE or the RN of the transmission source endpoint). Thus, the packet transmitted from a downstream node connected to the RN can be caused to arrive at the downstream node.

The P-GW converts and relays the transmission destination information or the transmission source information of a packet to be transmitted and received on the basis of the stored conversion table. More specifically, the P-GW converts the transmission destination information of a packet to the UE into address information of the upstream RN of the UE. In addition, the P-GW converts the transmission source information of the packet from the UE converted into the address information of the RN into the address information of the UE. Thus, the P-GW can aggregate packets transmitted and received by the downstream node connected to the RN to the RN.

Hereinafter, a flow of a communication process will be described in detail assuming the network configuration example illustrated in FIG. 1.

### (2. 1) Communication process of UE 1

Hereinafter, a communication process performed after the UE which has not acquired the IPv6 address is connected to the RN will be described. For example, a communication process of the UE 1 will be described.

### (2. 1. 1) Case where UE 1 starts communication

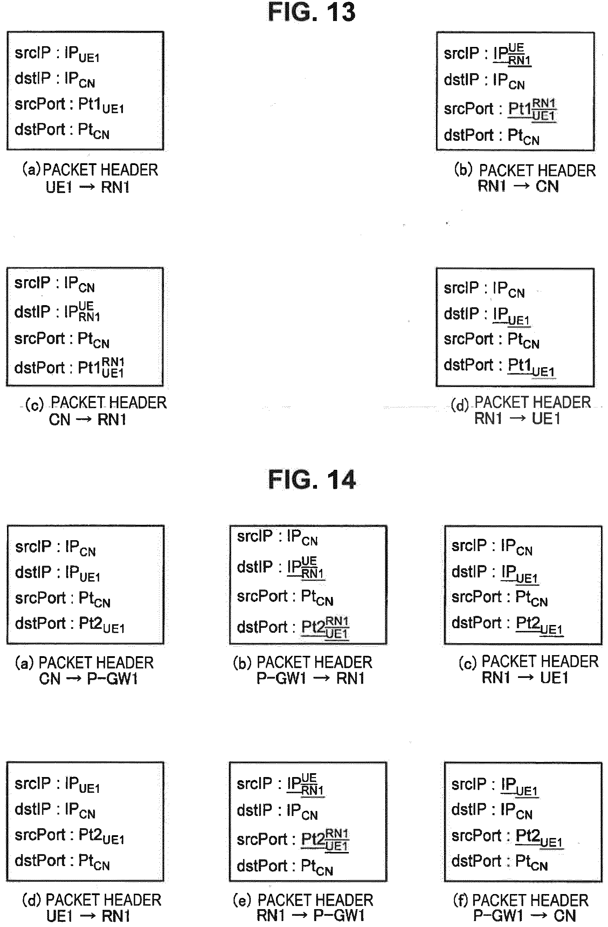

In this section, a communication process of a case where the UE 1 starts communication will be described. For example, a case where an application (port number: Pt1_{UE1}) of the UE 1 starts communicate with an application (IP address: IP_{CN} and port number: Pt_{CN}) on the Internet after the process described in the foregoing section (1. 7) will be assumed. Hereinafter, specific description will be made with reference to FIG. 13.

FIG. 13 is a diagram illustrating an example of content of a packet header transmitted and received by each node for communication by the UE 1 according to the embodiment. Each packet header includes a start-point IP address srcIP and a start-point port number srcPort of a packet and an endpoint IP address dstIP and an endpoint port number dstPort of the packet. In this drawing, a portion to be rewritten during the relay is underlined.

The UE 1 transmits a packet that has a header illustrated in Fig. 13(a) to the RN 1. When the packet is received, the RN 1 recognizes communication from a downstream side to an upstream side. Then, the RN 1 retrieves whether there is an entry in which a downstream IP address and a downstream port number match a start-point IP address and a start-point port number of the packet in the address conversion table (Table 5) stored by the RN 1. Since there is no corresponding entry at this time point, the RN 1 generates a new port number Pt^{RN1}_{UE1} and adds the new entry (the fifth entry of Table 5) to the address conversion table of the RN 1.

The entry means that the start-point IP address and the start-point port number are rewritten to IP^{UE}_{RN1} and Pt1^{RN1}_{UE1} in a case where the start-point IP address and the start-point port number are IP_{UE1} and Pt1_{UE1} when the RN 1 transmits a packet from the downstream side to the upstream side. The RN 1 performs rewriting based on the entry. As a result, the packet header after the RN 1 relays the packet from the downstream side to the upstream side is content illustrated in Fig. 13(b). The packet arrives at the P-GW 1 through routing control in LTE and further arrives at an application on the Internet through routing control in the Internet.

The application on the Internet receives the packet and the packet header at the time of responding is content illustrated in Fig. 13(c). The packet arrives at the P-GW 1 through routing control in the Internet and further arrives at the RN 1 through routing control in LTE. When the packet is received, the RN 1 recognizes the communication from the upstream side to the downstream side. Then, the RN 1 retrieves whether there is an entry in which an upstream IP address and an upstream port number match an endpoint IP address and an endpoint port number of the packet in the address conversion table stored by the RN 1. As a result, the fifth entry of Table 5 is found.

The entry means that the endpoint IP address and the endpoint port number are rewritten to IP_{UE1} and Pt1_{UE1} in a case where the endpoint IP address and the endpoint port number are IP^{UE}_{RN1} and Pt1^{RN1}_{UE1} when the RN 1 transmits a packet from the upstream side to the downstream side. The RN 1 performs rewriting based on the entry. As a result, the packet header after the RN 1 relays the packet from the upstream side to the downstream side is content illustrated in Fig. 13(d). The packet arrives at an application on the UE 1.

### (2. 1. 2) Case where UE 1 waits for communication start

In this section, a communication process in a case where the UE 1 waits for communication start will be described. For example, a case where an application (port number: Pt2_{UE1}) on the UE 1 waits for communication start from an application on the Internet after the process described in the foregoing section (2. 1. 1) will be assumed. Hereinafter, specific description will be made with reference to FIG. 14.

FIG. 14 is a diagram illustrating an example of content of a packet header transmitted and received by each node for communication by the UE 1 according to the embodiment. Each packet header includes a start-point IP address srcIP and a start-point port number srcPort of a packet and an endpoint IP address dstIP and an endpoint port number dstPort of the packet. In this drawing, a portion to be rewritten during the relay is underlined.

The UE 1 transmits an NAT registration request to the RN 1. The NAT registration request includes IP_{UE1} and Pt2_{UE1}. When the NAT registration request is received, the RN 1 generates a new port number Pt2^{RN1}_{UE1} and adds the new entry (the sixth entry of Table 5) to the address conversion table of the RN 1.

The entry means that the endpoint IP address and the endpoint port number are rewritten to IP_{UE1} and Pt2_{UE1} in a case where the endpoint IP address and the endpoint port number are IP^{UE}_{RN1} and Pt2^{RN1}_{UE1} when the RN 1 transmits a packet from the upstream side to the downstream side. In addition, the entry means that the start-point IP address and the start-point port number are rewritten to IP^{UE}_{RN1} and Pt2^{RN1}_{UE1} in a case where the start-point IP address and the start-point port number are IP_{UE1} and Pt2_{UE1} when the RN 1 transmits a packet from the downstream side to the upstream side.

Subsequently, the RN 1 transmits an NAT registration request to the P-GW 1. The NAT registration request includes IP^{UE}_{RN1}, Pt2^{RN1}_{UE1}, IP_{UE1}, and Pt2_{UE1}. When the NAT registration request is received, the P-GW 1 adds a new entry (the fifth entry of Table 4) to the address conversion table of the P-GW 1.

The entry means that the endpoint IP address and the endpoint port number are rewritten to IP^{UE}_{RN1} and Pt2^{RN1}_{UE1} in a case where the endpoint IP address and the endpoint port number are IP_{UE1} and Pt2_{UE1} when the P-GW 1 transmits a packet from the upstream side (that is, the PDN) to the downstream side (that is, the CN). In addition, the entry means that the start-point IP address and the start-point port number are rewritten to IP_{UE1} and Pt2_{UE1} in a case where the start-point IP address and the start-point port number are IP^{UE}_{RN1} and Pt2^{RN1}_{UE1} when the P-GW 1 transmits a packet from the downstream side to the upstream side.

In a case where an application (IP address: IP_{CN} and port number: Pt_{CN}) on the Internet starts communication with an application (port number: Pt2_{UE1}) operating on the UE 1, the packet that has header illustrated in FIG. 14(a) is transmitted. The packet arrives at the P-GW 1 through routing control in the Internet.

The P-GW 1 rewrites the endpoint IP address and the endpoint port number from IP_{UE1} and Pt2_{UE1} to IP^{UE}_{RN1} and Pt2^{RN1}_{UE1} in accordance with the fifth entry of the address conversion table (Table 4) of the P-GW 1. As a result, the packet header is content illustrated in FIG. 14(b). The packet arrives at the RN 1 through routing control in LTE.

When the packet is received, the RN 1 rewrites the endpoint IP address and the endpoint port number from IP^{UE}_{RN1} and Pt2^{RN1}_{UE1} to IP_{UE1} and Pt2_{UE1} in accordance with the sixth entry of the address conversion table (Table 5) of the RN 1. As a result, the packet header is content illustrated in FIG. 14(c). The packet arrives at the UE 1.

When the UE 1 receives a packet and responds, the packet header is content illustrated in FIG. 14(d). The UE 1 transmits the packet to the RN 1.

When the packet is received, the RN 1 rewrites the start-point IP address and the start-point port number from IP_{UE1} and Pt2_{UE1} to IP^{UE}_{RN1} and Pt2^{RN1}_{UE1} in accordance with the sixth entry of the address conversion table (Table 5) of the RN 1. As a result, the packet header is content illustrated in FIG 14(e). The packet arrives at the P-GW 1 through routing control in LTE.

When the packet is received, the P-GW 1 rewrites the start-point IP address and the start-point port number from IP^{UE}_{RN1} and Pt2^{RN1}_{UE1} to IP_{UE1} and Pt2_{UE1} in accordance with the fifth entry of the address conversion table (Table 4) of the P-GW 1. As a result, the packet header is content illustrated in FIG 14(f). The packet arrives at an application on the Internet through routing control in the Internet.

### (2. 2) Communication process of UE 2

Hereinafter, a communication process performed after the UE which has acquired the IPv6 address is connected to the RN will be described. For example, a communication process of the UE 2 will be described.

### (2. 2. 1) Case where UE 2 continues communication

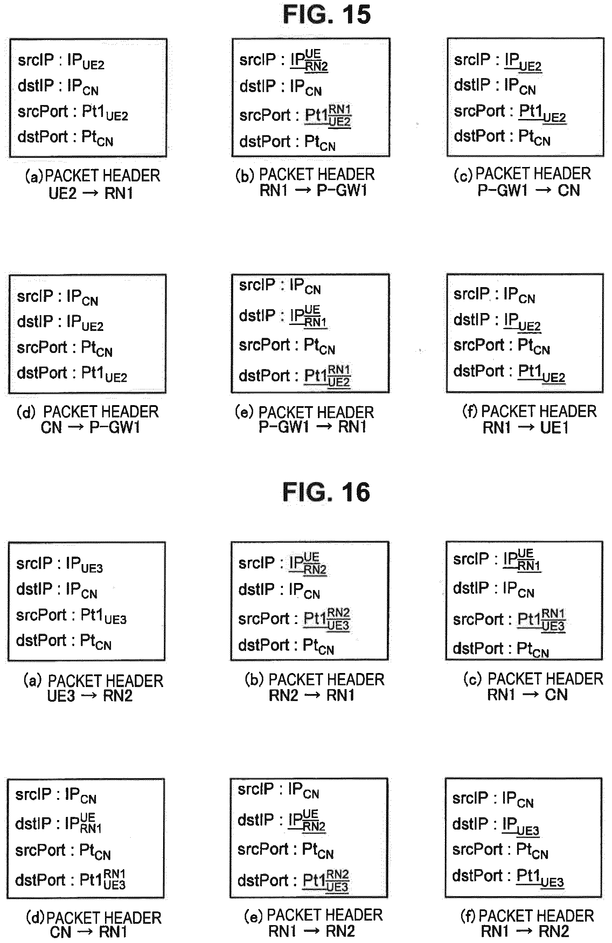

In this section, a communication process of a case where the UE 2 continues the communication will be described. For example, a case where an application (port number: Pt1_{UE2}) on the UE 2 continues the communication with an application (IPv6 address: IP_{CN} and port number: Pt1_{CN}) on the Internet after the process described in the foregoing section (2. 1. 2) will be assumed. Hereinafter, specific description will be made with reference to FIG. 15.

FIG 15 is a diagram illustrating an example of content of a packet header transmitted and received by each node for communication by the UE 2 according to the embodiment. Each packet header includes a start-point IP address srcIP and a start-point port number srcPort of a packet and an endpoint IP address dstIP and an endpoint port number dstPort of the packet. In this drawing, a portion to be rewritten during the relay is underlined.

The UE 2 transmits a packet that has a header illustrated in Fig. 15(a) to the RN 1. When the packet is received, the RN 1 rewrites the start-point IP address and the start-point port number of the packet from IP_{UE2} and Pt1_{UE2} to IP^{UE}_{RN1} and Pt1^{RN1}_{UE2} in accordance with the first entry of the address conversion table (Table 5) of the RN 1. As a result, the packet header after the RN 1 relays the packet from the downstream side to the upstream side is content illustrated in Fig. 15(b). The packet arrives at the P-GW 1 through routing control in LTE.

When the packet is received, the P-GW 1 rewrites the start-point IP address of the packet and the start-point port number from IP^{UE}_{RN1} and Pt1^{RN1}_{UE1} to IP_{UE2} and Pt1_{UE2} in accordance with the first entry of the address conversion table (Table 4) of the P-GW 1. As a result, the packet header after the relay of P-GW1 is content illustrated in FIG 15(c). The packet arrives at an application on the Internet through routing control in the Internet.

The application on the Internet receives the packet and the packet header at the time of responding is content illustrated in Fig. 15(d). The packet arrives at the P-GW 1 through routing control in the Internet.

The P-GW 1 rewrites the endpoint IP address and the endpoint port number of the packet from IP_{UE2} and Pt1_{UE2} to IP^{UE}_{RN1} and Pt1^{RN1}_{UE2} in accordance with the first entry of the address conversion table (Table 4) of the P-GW 1. As a result, the packet header after relay by the P-GW 1 is content illustrated in Fig. 15(e). The packet arrives at the RN 1 through routing control in LTE.

When the packet is received, the RN 1 rewrites the endpoint IP address and the endpoint port number of the packet from IP^{UE}_{RN1} and Pt2^{RN1}_{UE2} to IP_{UE2} and Pt2_{UE2} in accordance with the first entry of the address conversion table (Table 5) of the RN 1. As a result, the packet header after the RN 1 relays the packet is content illustrated in FIG. 15(f). The packet arrives at the UE 2.

### (2. 2. 2) Case where UE 2 waits for communication start

In this section, a communication process in a case where the UE 2 waits for communication start will be described. For example, a case where an application (port number: Pt2_{UE2}) on the RN 2 waits for communication start from an application on the Internet after the process described in the foregoing section (2. 2. 1) will be assumed.

The communication process in this case is the same as the communication process in the case where the UE 1 waits for the communication start, as described in the foregoing section (2. 1. 2). As a result, the seventh entry of Table 5 is added to the address conversion table stored by the RN 1 and the sixth entry of Table 4 is added to the address conversion table stored by the P-GW 1.

### (2. 3) Communication process of RN 2

Hereinafter, a communication process performed after the RN which has not acquired the IPv6 address is connected to a moving cell provided by another RN will be described. For example, a communication process of the RN 2 will be described.

### (2. 3. 1) Case where RN 2 starts communication

In this section, a communication process of a case where the RN 2 starts the communication will be described. For example, a case where an application (port number: Pt1_{RN2}) on the RN 2 starts the communication with an application (IPv6 address: IP_{CN} and port number: Pt_{CN}) on the Internet after the process described in the foregoing section (2. 2. 2) will be assumed.

The communication process in this case is the same as the communication process in the case where the UE 1 starts the communication, as described in the foregoing section (2. 1. 1). As a result, the eighth entry of Table 5 is added to the address conversion table stored by the RN 1.

### (2. 3. 2) Case where RN 2 waits for communication start

In this section, a communication process in a case where the RN 2 starts communication will be described. For example, a case where an application (port number: Pt2_{RN2}) on the RN 2 waits for communication start from an application on the Internet after the process described in the foregoing section (2. 3. 1) will be assumed.

The communication process in this case is the same as the communication process in the case where the UE 1 waits for the communication start, as described in the foregoing section (2. 1. 2). As a result, the ninth entry of Table 5 is added to the address conversion table stored by the RN 1 and the seventh entry of Table 4 is added to the address conversion table stored by the P-GW 1.

### (2. 4) Communication process of UE 3

Hereinafter, a communication process performed after the UE which has not acquired the IPv6 address is connected to a nested moving cell will be described. For example, a communication process of the UE 3 will be described.

### (2. 4. 1) Case where UE 3 starts communication

In this section, a communication process of a case where the UE 3 starts communication will be described. For example, a case where an application (port number: Pt1_{UE3}) of the UE 3 starts communicate with an application (IP address: IP_{CN} and port number: Pt_{CN}) on the Internet after the process described in the foregoing section (2.3.2) will be assumed. Hereinafter, specific description will be made with reference to FIG. 16.

FIG. 16 is a diagram illustrating an example of content of a packet header transmitted and received by each node for communication by the UE 3 according to the embodiment. Each packet header includes a start-point IP address srcIP and a start-point port number srcPort of a packet and an endpoint IP address dstTP and an endpoint port number dstPort of the packet. In this drawing, a portion to be rewritten during the relay is underlined.

The UE 3 transmits a packet that has a header illustrated in Fig. 16(a). When the packet is received, the RN 2 retrieves whether there is an entry in which a downstream IP address and a downstream port number match a start-point IP address and a start-point port number of the packet in the address conversion table (Table 6) stored by the RN 2. Since there is no corresponding entry at this time point, the RN 2 generates a new port number Pt1^{RN2}_{UE3} and adds the new entry (the second entry of Table 6) to the address conversion table of the RN 1.

The entry means that the start-point IP address and the start-point port number are rewritten to IP^{UE}_{RN2} and Pt1^{RN2}_{UE3} in a case where the start-point IP address and the start-point port number are IP_{UE3} and Pt1_{UE3} when the RN 2 transmits a packet from the downstream side to the upstream side. In addition, the entry means that the endpoint IP address and the endpoint port number are rewritten to IP_{UE3} and Pt1_{UE3} in a case where the endpoint IP address and the endpoint port number are IP^{UE}_{RN2} and Pt1^{RN2}_{UE3} when the RN 2 transmits a packet from the upstream side to the downstream side.

The RN 2 performs rewriting based on the entry. As a result, the packet header after the RN 2 relays the packet from the downstream side to the upstream side is content illustrated in Fig. 16(b). The packet arrives at the RN 1.

When the packet is received, the RN 1 retrieves whether there is an entry in which a downstream IP address and a downstream port number match a start-point IP address and a start-point port number of the packet in the address conversion table stored by the RN 1. Since there is no corresponding entry at this time point, the RN 1 generates a new port number Pt1^{RN1}_{UE3} and adds a new entry (the tenth entry of Table 5) to the address conversion table of the RN 1.

The entry means that the start-point IP address and the start-point port number are rewritten to IP^{UE}_{RN1} and Pt1^{RN1}_{UE3} in a case where the start-point IP address and the start-point port number are IP^{UE}_{RN2} and Pt1^{RN2}_{UE3} when the RN 1 transmits a packet from the downstream side to the upstream side. In addition, the entry means that the endpoint IP address and the endpoint port number are rewritten to IP^{UE}_{RN2} and Pt1^{RN2}_{UE3} in a case where the endpoint IP address and the endpoint port number are IP^{UE}_{RN1} and Pt1^{RN1}_{UE3} when the RN 1 transmits a packet from the upstream side to the downstream side.

The RN 1 performs rewriting based on the entry. As a result, the packet header after the RN 1 relays the packet from the downstream side to the upstream side is content illustrated in Fig. 16(c). The packet arrives at the P-GW 1 through routing control in LTE and further arrives at an application on the Internet through routing control in the Internet.

The application on the Internet receives the packet and the packet header at the time of responding is content illustrated in Fig. 16(d). The packet arrives at the P-GW 1 through routing control in the Internet and further arrives at the RN 1 through routing control in LTE.

The RN 1 rewrites the endpoint IP address and the endpoint port number from IP^{UE}_{RN1} and Pt1^{RN1}_{UE3} to IP^{UE}_{RN2} and Pt1^{RN2}_{UE3} in accordance with the tenth entry of the address conversion table (Table 5) of the RN 1. As a result, the packet header after the RN 1 relays the packet from the upstream side to the downstream side is content illustrated in Fig. 16(e). The packet arrives at the RN 2.

When the packet is received, the RN 2 rewrites the endpoint IP address and the endpoint port number from IP^{UE}_{RN2} and Pt1^{RN2}_{UE3} to IP_{UE3} and Pt1_{UE3} in accordance with the second entry of the address conversion table (Table 6) of the RN 2. As a result, the packet header after the RN 2 relays the packet from the upstream side to the downstream side is content illustrated in Fig. 16(f). The packet arrives at an application on the UE 3.

### (2. 4. 2) Case where UE 3 waits for communication start

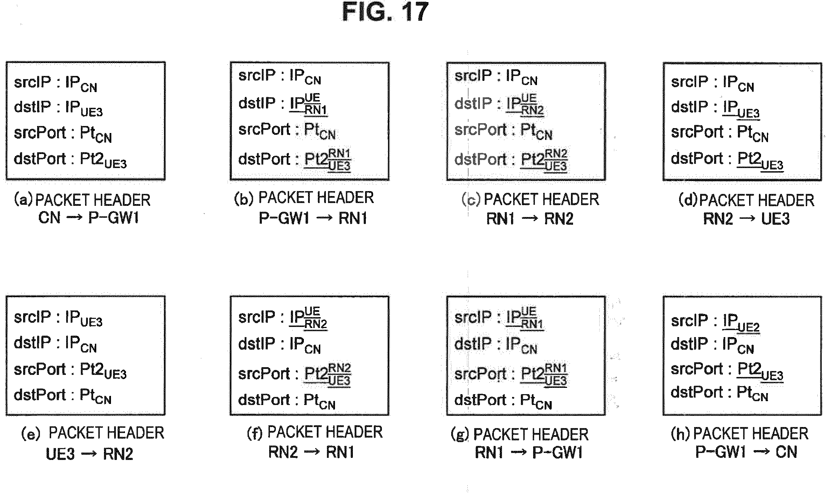

In this section, a communication process in a case where the UE 3 waits for communication start will be described. For example, a case where an application (port number: Pt2_{UE3}) on the UE 3 waits for communication start from an application on the Internet after the process described in the foregoing section (2. 4. 1) will be assumed. Hereinafter, specific description will be made with reference to FIG. 17.

FIG. 17 is a diagram illustrating an example of content of a packet header transmitted and received by each node for communication by the UE 3 according to the embodiment. Each packet header includes a start-point IP address srcIP and a start-point port number srcPort of a packet and an endpoint IP address dstIP and an endpoint port number dstPort of the packet. In this drawing, a portion to be rewritten during the relay is underlined.

The UE 3 transmits an NAT registration request to the RN 2. The NAT registration request includes IP_{UE3} and Pt2_{UE3}. When the NAT registration request is received, the RN 2 generates a new port number Pt2^{RN2}_{UE3} and adds the new entry (the third entry of Table 6) to the address conversion table of the RN 1.

The entry means that the endpoint IP address and the endpoint port number are rewritten to IP_{UE3} and Pt2_{UE3} in a case where the endpoint IP address and the endpoint port number are IP^{UE}_{RN2} and Pt2^{RN2}_{UE3} when the RN 2 transmits a packet from the upstream side to the downstream side. In addition, the entry means that the start-point IP address and the start-point port number are rewritten to IP^{UE}_{RN2} and Pt2^{RN2}_{UE3} in a case where the start-point IP address and the start-point port number are IP_{UE3} and Pt2_{UE3} when the RN 2 transmits a packet from the downstream side to the upstream side.

Subsequently, the RN 2 transfers an NAT registration request to the RN 1. The NAT registration request includes IP^{UE}_{RN2}, Pt2^{RN2}_{UE3}, IP_{UE3}, and Pt2_{UE3}. When the NAT registration request is received, the RN 1 generates a new port number Pt2^{RN1}_{UE3} and adds a new entry (the eleventh entry of Table 5) to the address conversion table of the RN 1.

The entry means that the endpoint IP address and the endpoint port number are rewritten to IP^{U}_{RN2} and Pt2^{RN2}_{UE3} in a case where the endpoint IP address and the endpoint port number are IP^{UE}_{RN1} and Pt2^{RN1}_{UE3} when the RN 1 transmits a packet from the upstream side to the downstream side. In addition, the entry means that the start-point IP address and the start-point port number are rewritten to IP^{UE}_{RN1} and Pt2^{RN1}_{UE3} in a case where the start-point IP address and the start-point port number are IP^{U}_{RN2} and Pt2^{RN2}_{UE3} when the RN 1 transmits a packet from the downstream side to the upstream side.

Subsequently, the RN 1 transfers an NAT registration request to the P-GW 1. The NAT registration request includes IP^{UE}_{RN1}, Pt2^{RN1}_{UE3}, IP_{UE3}, and Pt2_{UE3}. When the NAT registration request is received, the P-GW 1 adds a new entry (the eighth entry of Table 4) to the address conversion table stored by the P-GW 1.

The entry means that the endpoint IP address and the endpoint port number are rewritten to IP^{UE}_{RN1} and Pt2^{RN1}_{UE3} in a case where the endpoint IP address and the endpoint port number are IP_{UE3} and Pt2_{UE3} when the P-GW 1 transmits a packet. In addition, the entry means that the start-point IP address and the start-point port number are rewritten to IP_{UE3} and Pt2_{UE3} in a case where the start-point IP address and the start-point port number are IP^{UE}_{RN1} and Pt2^{RN1}_{UE3}.

In a case where an application (IP address: IP_{CN} and port number: Pt_{CN}) on the Internet starts communication with an application (port number: Pt2_{UE3}) operating on the UE 3, the packet that has header illustrated in FIG. 17(a) is transmitted. The packet arrives at the P-GW 1 through routing control in the Internet.

The P-GW 1 rewrites the start-point IP address and the start-point port number from IP_{UE3} and Pt2_{UE3} to IP^{UE}_{RN1} and Pt2^{RN1}_{UE3} in accordance with the eighth entry of the address conversion table (Table 4) of the P-GW 1. As a result, the packet header is content illustrated in FIG. 17(b). The packet arrives at the RN 1 through routing control in LTE.

When the packet is received, the RN 1 rewrites the endpoint IP address and the endpoint port number from IP^{UE}_{RN1} and Pt2^{RN1}_{UE3} to IP^{UE}_{RN2} and Pt2^{RN2}_{UE3} in accordance with the 11th entry of the address conversion table (Table 5) of the RN 1. As a result, the packet header is content illustrated in FIG. 17(c). The packet arrives at the RN 2.

When the packet is received, the RN 2 rewrites the endpoint IP address and the endpoint port number from IP^{UE}_{RN2} and Pt2^{RN2}_{UE3} to IP_{UE3} and Pt2_{UE3} in accordance with the third entry of the address conversion table (Table 6) of the RN 2. As a result, the packet header is content illustrated in FIG. 17(d). The packet arrives at an application on the UE 2.

When the UE 3 receives the packet and responds, the packet header is content illustrated in FIG. 17(e). The packet arrives at the RN 2.

When the packet is received, the RN 2 rewrites the start-point IP address and the start-point port number from IP_{UE3} and Pt2_{UE3} to IP^{UE}_{RN2} and Pt2^{RN2}_{UE3} in accordance with the third entry of the address conversion table (Table 6) of the RN 2. As a result, the packet header is content illustrated in FIG. 17(f). The packet arrives at the RN 1.

When the packet is received, the RN 1 rewrites the start-point IP address and the start-point port number from IP^{UE}_{RN2} and Pt2^{RN2}_{UE3} to IP^{UE}_{RN1} and Pt2^{RN1}_{UE3} in accordance with the 11th entry of the address conversion table (Table 5) of the RN 1. As a result, the packet header is content illustrated in FIG. 17(g). The packet arrives at the P-GW 1 through routing control in LTE.

When the packet is received, the P-GW 1 rewrites the start-point IP address and the start-point port number from IP^{UE}_{RN3} and Pt2^{RN1}_{UE3} to IP_{UE3} and Pt2_{UE3} in accordance with the eighth entry of the address conversion table (Table 4) of the P-GW 1. As a result, the packet header is content illustrated in FIG 17(h). The packet arrives at an application on the Internet through routing control in the Internet.

### (2. 5) Communication process of UE 4

Hereinafter, a communication process performed after the UE which has acquired the IPv6 address is connected to the nested moving cell will be described. For example, a communication process of the UE 4 will be described.

### (2. 5. 1) Case where UE 4 continues communication

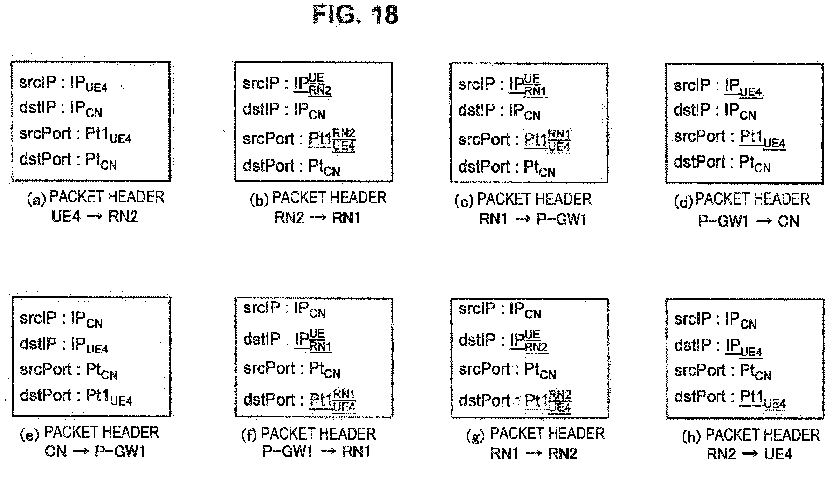

In this section, a communication process of a case where the UE 4 continues the communication will be described. For example, a case where an application (port number: Pt1_{UE4}) on the UE 4 continues the communication with an application (IP address: IP_{CN} and port number: Pt1_{CN}) on the Internet after the process described in the foregoing section (2. 4. 2) will be assumed. Hereinafter, specific description will be made with reference to FIG. 18.

FIG. 18 is a diagram illustrating an example of content of a packet header transmitted and received by each node for communication by the UE 4 according to the embodiment. Each packet header includes a start-point IP address srcIP and a start-point port number srcPort of a packet and an endpoint IP address dstIP and an endpoint port number dstPort of the packet. In this drawing, a portion to be rewritten during the relay is underlined.

The UE 4 transmits a packet that has a header illustrated in Fig. 18(a) to the RN 1. When the packet is received, the RN 2 rewrites the start-point IP address and the start-point port number of the packet from IP_{UE4} and Pt1_{UE4} to IP^{UE}_{RN2} and Pt1^{RN2}_{UE4} in accordance with the first entry of the conversion table (Table 6) of the RN 2. As a result, the packet header after the RN 2 relays the packet from the downstream side to the upstream side is content illustrated in Fig. 18(b). The packet arrives at the RN 1.

When the packet is received, the RN 1 rewrites the start-point IP address and the start-point port number of the packet from IP^{UE}_{RN2} and Pt1^{RN2}_{UE4} to IP^{UE}_{RN1} and Pt1^{RN1}_{UE4} in accordance with the second entry of the address conversion table (Table 5) of the RN 1. As a result, the packet header after the RN 1 relays the packet from the downstream side to the upstream side is content illustrated in FIG. 18(c). The packet arrives at the P-GW 1 through routing control in LTE.

When the packet is received, the P-GW 1 rewrites the start-point IP address of the packet and the start-point port number from IP^{UE}_{RN1} and Pt1^{RN1}_{UE4} to IP_{UE4} and Pt1_{UE4} in accordance with the second entry of the address conversion table (Table 4) of the P-GW 1. As a result, the packet header after the relay of P-GW1 from the downstream side to the upstream side is content illustrated in FIG. 18(d). The packet arrives at an application on the Internet through routing control in the Internet.

The application on the Internet receives the packet and the packet header at the time of responding is content illustrated in Fig. 18(e). The packet arrives at the P-GW 1 through routing control in the Internet.

When receiving the packet, the P-GW 1 rewrites the endpoint IP address and the endpoint port number of the packet from IP_{UE4} and Pt1_{UE4} to IP^{UE}_{RN1} and Pt1^{RN1}_{UE4} in accordance with the second entry of the address conversion table (Table 4) of the P-GW 1. As a result, the packet header after relay from the upstream side to the downstream side by the P-GW 1 is content illustrated in Fig. 18(f). The packet arrives at the RN 1 through routing control in LTE.

When the packet is received, the RN 1 rewrites the endpoint IP address and the endpoint port number of the packet from IP^{UE}_{RN1} and Pt2^{RN1}_{UE4} to IP^{UE}_{RN2} and Pt1^{RN2}_{UE4} in accordance with the second entry of the address conversion table (Table 5) of the RN 1. As a result, the packet header after the RN 1 relays the packet from the upstream side to the downstream side is content illustrated in FIG 15(f). The packet arrives at the RN 2.

When the packet is received, the RN 2 rewrites the endpoint IP address and the endpoint port number of the packet from IP^{UE}_{RN2} and Pt1^{RN2}_{UE4} to IP_{UE4} and Pt1_{UE4} in accordance with the first entry of the address conversion table (Table 6) of the RN 2. As a result, the packet header after the RN 2 relays the packet from the upstream side to the downstream side is content illustrated in Fig. 18(h). The packet arrives at an application on the UE 4.

### (2. 5. 2) Case where UE 4 waits for communication start

In this section, a communication process in a case where the UE 4 waits for communication start will be described. For example, a case where an application (port number: Pt2_{UE4}) on the UE 4 waits for communication start from an application on the Internet after the process described in the foregoing section (2. 5. 1) will be assumed.

The communication process in this case is the same as the communication process in the case where the UE 3 waits for the communication start, as described in the foregoing section (2. 4. 2). As a result, the fourth entry of Table 6 is added to the address conversion table stored by the RN 2, the twelfth entry of Table 5 is added to the address conversion table stored by the RN 1, and the ninth entry of Table 4 is added to the address conversion table stored by the P-GW 1.

### (2. 6) Communication process of RN 3

Hereinafter, a communication process performed after the RN which has acquired the IPv6 address is connected to a moving cell provided by another RN will be described. For example, a communication process of the RN 3 will be described.

### (2. 6. 1) Case where RN 3 continues communication

In this section, a communication process of a case where the RN 3 continues the communication will be described. For example, a case where an application (port number: Pt1_{RN3}) on the RN 3 continues the communication with an application (IPv6 address: IP_{CN} and port number: Pt_{CN}) on the Internet after the process described in the foregoing section (2. 5. 2) will be assumed.

The communication process in this case is the same as the communication process in the case where the UE 2 continues the communication, as described in the foregoing section (2. 2. 1).

### (2. 6. 2) Case where RN 3 waits for communication start

In this section, a communication process in a case where the RN 3 waits for communication start will be described. For example, a case where an application (port number: Pt2_{RN3}) on the RN 3 waits for communication start from an application on the Internet after the process described in the foregoing section (2. 6. 1) will be assumed.

The communication process in this case is the same as the communication process in the case where the UE 1 waits for the communication start, as described in the foregoing section (2. 1. 2). As a result, the 13th entry of Table 5 is added to the address conversion table stored by the RN 1 and the tenth entry of Table 4 is added to the address conversion table stored by the P-GW 1.

### (2.7) Communication process of UE 5

Hereinafter, a communication process performed in a case where an RN of a connection destination of a UE moves to a moving cell provided by another RN will be described. For example, a communication process of the UE 5 will be described.

### (2. 7. 1) Case where UE5 continues communication

In this section, a communication process of a case where the UE 5 continues the communication will be described. For example, a case where an application (port number: Pt1_{RN5}) on the RN 5 continues the communication with an application (IPv6 address: IP_{CN} and port number: Pt_{CN}) on the Internet after the process described in the foregoing section (2. 6. 2) will be assumed.

The communication process in this case is the same as the communication process in the case where the UE 4 continues the communication, as described in the foregoing section (2. 5. 1).

### (2. 7. 2) Case where UE 5 waits for communication start

In this section, a communication process in a case where the UE 5 waits for communication start will be described. For example, a case where an application (port number: Pt2_{UE5}) on the RN 5 waits for communication start from an application on the Internet after the process described in the foregoing section (2. 7. 1) will be assumed.

The communication process in this case is the same as the communication process in the case where the UE 3 waits for the communication start, as described in the foregoing section (2. 4. 2). As a result, the second entry of Table 7 is added to the address conversion table stored by the RN 3, the 14th entry of Table 5 is added to the address conversion table stored by the RN 1, and the 11th entry of Table 4 is added to the address conversion table stored by the P-GW 1.

<3.3. Handover process>

### (3.1) Handover in S-GW

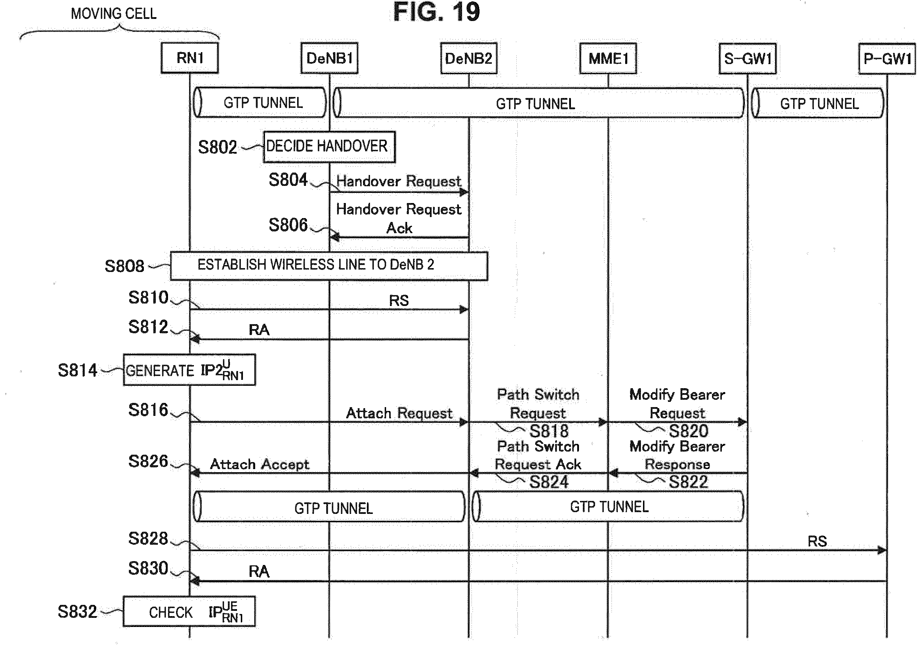

In this section, a process related to handover in the S-GW will be described. For example, a case of handover of the RN 1 from the DeNB 1 to the DeNB 2 will be assumed. An example of a handover process when the RN 1 is handed over from the DeNB 1 to the DeNB 2 in a state in which the UE 1, the RN 2, and the UE 2 are connected to the downstream side of the RN 1 will be described with reference to FIG. 19.

FIG. 19 is a sequence diagram illustrating an example of a flow of a handover process performed in the system according to the embodiment. In this sequence, the RN 1, the DeNB 1, the DeNB 2, the MME 1, the S-GW 1, and the P-GW 1 are involved. As illustrated in FIG. 19, the GTP tunnels are configured between the P-GW 1 and the S-GW1, between the S-GW1 and the DeNB1, and between the DeNB1 and the RN1.

First, the DeNB 1 decides handover execution of the RN 1 to the DeNB 2 (step S802).

Subsequently, the DeNB 1 transmits a handover request to the DeNB 2 (step S804). The handover request includes ID_{RN1}.

Subsequently, the DeNB 2 transmits a handover request response (handover request Ack) to the DeNB 1 (step S806). The handover request response includes ID_{RN1}.

Next, the RN 1 establishes a wireless line with the DeNB 2 (step S808).

Subsequently, the RN 1 transmits a RS destined for all the outer multicast addresses of a link local (step S810).

Subsequently, the DeNB 2 receives the RS and transmits the RA destined for a link local address of the RN 1 (step S812). The RA includes Pref^{D}_{DeNB2} which is a prefix of a downstream interface of the DeNB 2.

Subsequently, the RN 1 receives the RA and generates IP2^{U}_{RN1} which is an IPv6 address from Pref^{D}_{DeNB2} and ifid^{U}_{RN1} (step S814). IP2^{U}_{RN1} is used when the RN 1 establishes the GTP tunnel with the DeNB 2.

Subsequently, the RN 1 transmits an attach request to the DeNB 2 (step S816). The attach request includes ID_{RN1} which is an identifier of the RN 1, IP^{UE}_{RN1}, and Pref^{D}_{RN1}.

Subsequently, when the attach request is received, the DeNB 2 transmits a path switch request to the MME 1 (step S818). The path switch request includes ID_{RN1}, IP^{UE}_{RN1}, Pref^{D}_{RN1}, and IP^{D}_{DeNB2}.

Subsequently, when the path switch request is received, the MME 1 transmits a modify bearer request to the S-GW 1 (step S820). The modify bearer request includes ID_{RN1}, IP^{UE}_{RN1}, and Pref^{D}_{RN1}.

Subsequently, when the modify bearer request is received, the S-GW 1 detects the handover of the RN 1 between the downstream DeNBs of the S-GW 1, releases the GTP tunnel established between the S-GW 1 and the DeNB 1, and configures a GTP tunnel between the S-GW 1 and the DeNB 2. Endpoints of the GTP tunnel are IP^{D}_{SGW1} which is an IPv6 address of a downstream interface of the S-GW 1 and IP^{U}_{DeNB2} which is an IPv6 address of an upstream interface of the DeNB 2. Then, the S-GW 1 associates a transfer destination of Pref^{UE}_{RN1} and Pref^{D}_{RN1} with the GTP tunnel. Then, the S-GW 1 transmits a modify bearer response to the MME 1 (step S822). The modify bearer response includes ID_{RN1}, IP^{UE}_{RN1}, and Pref^{D}_{RN1}.

Subsequently, when the modify bearer response is received, the MME 1 updates the management table (where the first entry of Table 8 is an updating target). Then, the MME 1 transmits a path switch request response to the DENB 2 (step S824). The path switch request response includes ID_{RN1}, IP^{UE}_{RN1}, and Pref^{D}_{RN1}.

Subsequently, when the path switch request response is received, the DeNB 2 configures a GTP tunnel between the DeNB 2 and the S-GW 1. Endpoints of the GTP tunnel are IP^{U}_{DeNB2} and IP^{D}_{SGW1}· Further, the DeNB 2 configures a GTP tunnel with the RN 1. Endpoints of the GTP tunnel are IP^{D}_{DeNB2} which is an IPv6 address of a downstream interface of the DeNB 2 and IP^{U}_{RN1} which is an IPv6 address of an upstream interface of the RN 1. Further, the DeNB 2 associates the transfer destination of Pref^{UE}_{RN1} and Pref^{D}_{RN1} with the GTP tunnel to the RN 1. Subsequently, the DeNB 2 transmits an attach accept to the RN 1 (step S826). The attach accept includes Pref^{UE}_{RN1}.

As a result of the foregoing process, the GTP tunnels are established between the RN 1 and the DeNB 2 and between the DeNB 2 and the S-GW 1. On the other hand, the GTP tunnel between the S-GW 1 and the P-GW 1 is maintained.

Subsequently, when the attach accept is received, the RN 1 transmits the RS to the P-GW 1 in order to acquire the IPv6 address when the RN 1 operates as a UE (step S828).

Subsequently, when the RS is received, the P-GW 1 transmits the RA to the RN 1 (step S830). The RA includes Pref^{UE}_{RN1}.

Subsequently, the RN 1 receives the RA and confirms whether IP^{UE}_{RN1} can be continuously used (step S832).

As a result of the above-described process, the S-GW 1 and the DeNB 2 stores routing tables shown in Tables 9A and 9B. In addition, the MME 1 stores a management table shown in FIG 8. Note that the routing table and the address conversion table stored by the P-GW 1 and the address conversion tables stored by the RN 1, the RN 2, and the RN 3 are not changed.

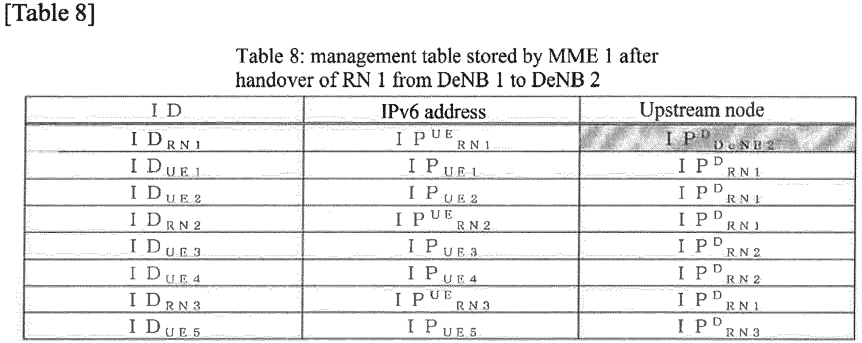

### [Table 9A]

**Table 9A: routing table stored by S-GW 1 after handover of RN 1 from DeNB 1 to DeNB 2**

| Endpoint IPv6 address | Transfer destination |
|---|---|
| Pref^{UE}_{RN1} | GTP_{DeNB2} |
| Pref^{D}_{RN1} | GTP_{DeNB2} |
| ... | ... |
| default | IP^{D}_{PGW1} |

### [Table 9B]

**Table 9B: routing table stored by DeNB 2 after handover of RN 1 from DeNB 1 to DeNB 2**

| Endpoint IPv6 address | Transfer destination |
|---|---|
| Pref^{UE}_{RN1} | GTP_{RN1} |
| Pref^{D}_{RN1} | GTP_{RN1} |
| ... | ... |
| default | IP^{D}_{SGW1} |

### (3.2) Handover between S-GWs

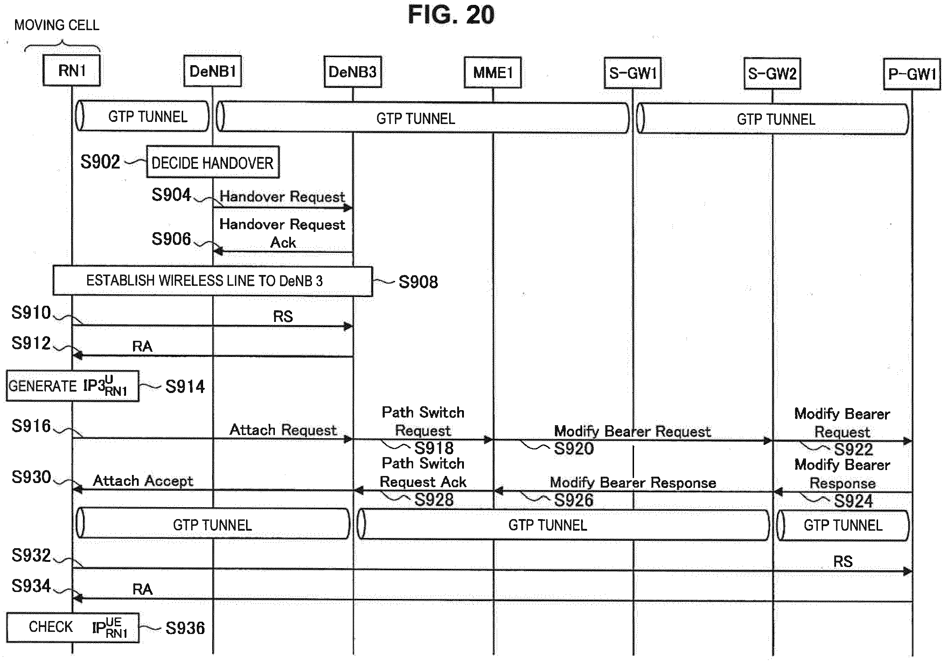

In this section, a process related to handover between the S-GWs will be described. For example, a case of handover of the RN 1 from the DeNB 1 to the DeNB 3 will be assumed. An example of a handover process when the RN 1 is handed over from the DeNB 1 to the DeNB 3 in a state in which the UE 1, the RN 2, and the UE 2 are connected to the downstream side of the RN 1 will be described with reference to FIG. 20.

FIG. 20 is a sequence diagram illustrating an example of a flow of a handover process performed in the system according to the embodiment. In this sequence, the RN 1, the DeNB 1, the DeNB 3, the MME 1, the S-GW 1, the S-GW 2, and the P-GW 1 are involved. As illustrated in FIG. 20, the GTP tunnels are configured between the P-GW 1 and the S-GW1, between the S-GW1 and the DeNB1, and between the DeNB1 and the RN1.

First, the DeNB 1 decides handover execution of the RN 1 to the DeNB 3 (step S902).

Subsequently, the DeNB 1 transmits a handover request to the DeNB 3 (step S904). The handover request includes ID_{RN1}.

Subsequently, the DeNB 3 transmits a handover request response (handover request Ack) to the DeNB 1 (step S906). The handover request response includes ID_{RN1}.

Next, the RN 1 establishes a wireless line with the DeNB 3 (step S908).

Subsequently, the RN 1 transmits a RS destined for all the outer multicast addresses of a link local (step S910).

Subsequently, the DeNB 3 receives the RS and transmits the RA destined for a link local address of the RN 1 (step S912). The RA includes Pref^{D}_{DeNB3} which is a prefix of a downstream interface of the DeNB 3.

Subsequently, the RN 1 receives the RA and generates IP3^{U}_{RN1} which is an IPv6 address from Pref^{D}_{DeNB3} and ifid^{U}_{RN1} (step S914). IP3^{U}_{RN1} is used when the RN 1 establishes the GTP tunnel with the DeNB 3.

Subsequently, the RN 1 transmits an attach request to the DeNB 3 (step S916). The attach request includes ID_{RN1} which is an identifier of the RN 1, IP^{UE}_{RN1}, and Pref^{D}_{RN1}.

Subsequently, when the attach request is received, the DeNB 3 transmits a path switch request to the MME 1 (step S918). The path switch request includes ID_{RN1}, IP^{UE}_{RN1}, Pref^{D}_{RN1}, and IP^{D}_{DeNB2}.

Subsequently, when the path switch request is received, the MME 1 transmits a modify bearer request to the S-GW 2 (step S920). The modify bearer request includes ID_{RN1}, IP^{UE}_{RN1}, and Pref^{D}_{RN1}.

Subsequently, when the modify bearer request is received, the S-GW 2 transmits the modify bearer request to the P-GW 1 (step S922).

Subsequently, when the modify bearer request is received, the P-GW 1 detects the handover of the RN 1 between the S-GW 1 of the S-GW 2, releases the GTP tunnel established between the P-GW 1 and the S-GW 1 and the GTP tunnel established between the S-GW 1 and the DeNB 1, and configures a GTP tunnel between the P-GW 1 and the S-GW 2. Endpoints of the GTP tunnel are IP^{D}_{PGW1} which is an IPv6 address of a downstream interface of the P-GW 1 and IP^{U}_{SGW2} which is an IPv6 address of an upstream interface of the S-GW 2. Then, the P-GW 1 associates a transfer destination of Pref^{UE}_{RN1} and Pref^{D}_{RN1} with the GTP tunnel. Then, the P-GW 1 transmits a modify bearer response to the S-GW 2 (step S924). The modify bearer response includes ID_{RN1}, IP^{UE}_{RN1}, and Pref^{D}_{RN1}.

Subsequently, when the modify bearer response is received, the S-GW 2 configures a GTP tunnel between the P-GW 1 and the S-GW 2. Endpoints of the GTP tunnel are IP^{U}_{SGW2} which is an IPv6 address of an upstream interface of the S-GW 2 and IP^{D}_{PGW1} which is an IPv6 address of a downstream interface of the P-GW 1. Further, the S-GW 2 configures a GTP tunnel with the DeNB 3. Endpoints of the GTP tunnel are IP^{D}_{SGW2} which is an IPv6 address of a downstream interface of the S-GW 2 and IP^{U}_{DeNB3} which is an IPv6 address of an upstream interface of the DeNB 3. Further, the S-GW 2 associates the transfer destination of Pref^{UE}_{RN1} and Pref^{D}_{RN1} with the GTP tunnel to the DeNB 3. Subsequently, the S-GW 2 transmits the modify bearer response to the MME 1 (step S926). The modify bearer response includes ID_{RN1}, IP^{UE}_{RN1}, and Pref^{D}_{RN1}.

Subsequently, when the modify bearer response is received, the MME 1 updates the management table (where the first entry of Table 10 is an updating target). Then, the MME 1 transmits a path switch request response to the DENB 3 (step S928). The path switch request response includes ID_{RN1}, IP^{UE}_{RN1}, and Pref^{D}_{RN1}.

Subsequently, when the path switch request response is received, the DeNB 3 configures a GTP tunnel between the DeNB 3 and the S-GW 2. Endpoints of the GTP tunnel are IP^{U}_{DeNB3} which is an IPv6 address of an upstream interface of the DeNB 3 and IP^{D}_{SGW2} which is an IPv6 address of a downstream interface of the S-GW 2. Further, the DeNB 3 configures a GTP tunnel with the RN 1. Endpoints of the GTP tunnel are IP^{D}_{DeNB3} which is an IPv6 address of a downstream interface of the DeNB 3 and IP^{U}_{RN1} which is an IPv6 address of an upstream interface of the RN 1. Further, the DeNB 3 associates the transfer destination of Pref^{UE}_{RN1} and Pref^{D}_{RN1} with the GTP tunnel to the RN 1. Subsequently, the DeNB 3 transmits an attach accept to the RN 1 (step S930). The attach accept includes ifid^{UE}_{RN1}.

As a result of the foregoing process, the GTP tunnels are established between the RN 1 and the DeNB 3, between the DeNB 3 and the S-GW 2, and between the S-GW 2 and the P-GW 1.

Subsequently, when the attach accept is received, the RN 1 transmits the RS to the P-GW 1 in order to acquire the IPv6 address when the RN 1 operates as a UE (step S932).

Subsequently, when the RS is received, the P-GW 1 transmits the RA to the RN 1 (step S934). The RA includes Pref^{UE}_{RN1}.

Subsequently, the RN 1 receives the RA and confirms whether IP^{UE}_{RN1} can be continuously used (step S936).

As a result of the above-described process, the P-GW 1, the S-GW 2, and the DeNB 3 stores routing tables shown in Tables 11A, 11B, and 11C. In addition, the MME 1 stores a management table shown in FIG. 10. Note that the address conversion table stored by the P-GW 1, the RN 1, and the RN 2 are not changed.

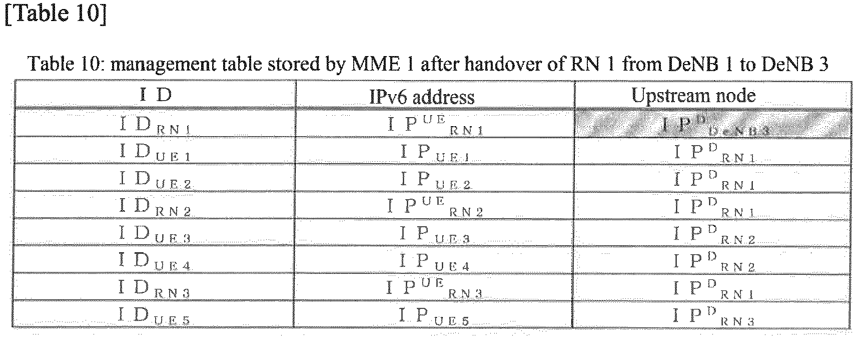

### [Table 11A]

**Table 11A: routing table stored by P-GW 1 after handover of RN 1 from DeNB 1 to DeNB 3**

| Endpoint IPv6 address | Transfer destination |
|---|---|
| Pref^{UE}_{RN1} | GTP_{SGW2} |
| Pref^{D}_{RN1} | GTP_{SGW2} |
| ... | ... |
| default | Global Internet |

### [Table 11B]

**Table 11B: routing table stored by S-GW 2 after handover of RN 1 from DeNB 1 to DeNB 3**

| Endpoint IPv6 address | Transfer destination |
|---|---|
| Pref^{UE}_{RN1} | GTP_{DeNB3} |
| Pref^{D}_{RN1} | GTP_{DeNB3} |
| ... | ... |
| default | IP^{D}_{PGW1} |

### [Table 11C]

**Table 11C: routing table stored by DeNB 3 after handover of RN 1 from DeNB 1 to DeNB 3**

| Endpoint IPv6 address | Transfer destination |
|---|---|
| Pref^{UE}_{RN1} | GTP_{RN1} |
| Pref^{D}_{RN1} | GTP_{RN1} |
| ... | ... |
| default | IP^{D}_{SGW2} |

### <3.4. Management of address conversion table entry>

As shown in the foregoing Tables 4 to 7, the entries of the conversion tables have timer fields. In the timer fields, a timeout time (for example, 60 seconds) is set when the entry is generated or accessed. Then, in a case where the timer field of each entry is subtracted by an elapsed time for each predetermined time (for example, 1 second) and the value becomes 0, the entry may be deleted.

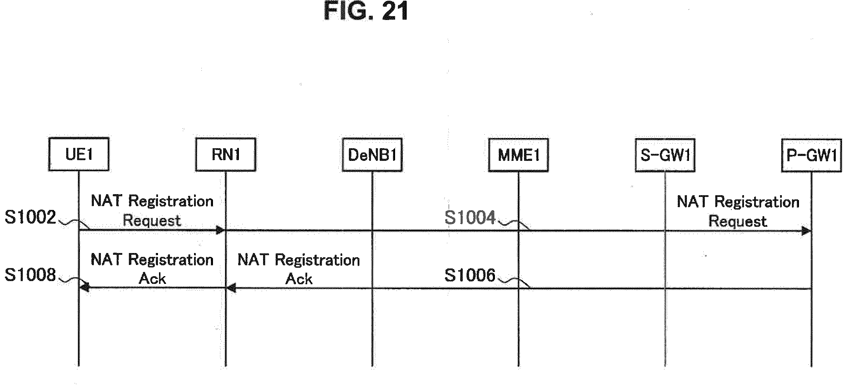

In addition, an application which waits for communication start on the UE or the RN transmits an NAT registration request to an upstream node for each updating time (for example, 30 seconds) and receives an NAT registration response. By exchanging the messages, the address conversion table entry for waiting for the communicating start can be set not to be deleted. A sequence in this case is illustrated in FIG. 21.

FIG. 21 is a sequence diagram illustrating an example of a flow of a process of maintaining an address conversion table entry performed in the system according to the embodiment. In this sequence, the UE 1, the RN 1, and the P-GW 1 are involved. As illustrated in FIG. 21, the UE 1 first transits an NAT registration request to the RN 1 (step S1002). Subsequently, the RN 1 transmits the NAT registration request to the P-GW 1 (step S1004). Subsequently, the P-GW 1 transmits the NAT registration response to the RN 1 (step S1006). Subsequently, the RN 1 transmits the NAT registration response to the UE 1 (step S1008).

For example, after the communication of the foregoing section (2. 1. 2), the P-GW 1 stores the fifth entry of Table 4 and the RN 1 stores the fifth and sixth entries of Table 5. When the UE 1 is disconnected from the RN 1 in this state, the three entries are deleted after the timeout time. In this way, the address conversion table entry for the UE or the RN disconnected from the moving cell is deleted.

### <3.5. Modification examples>

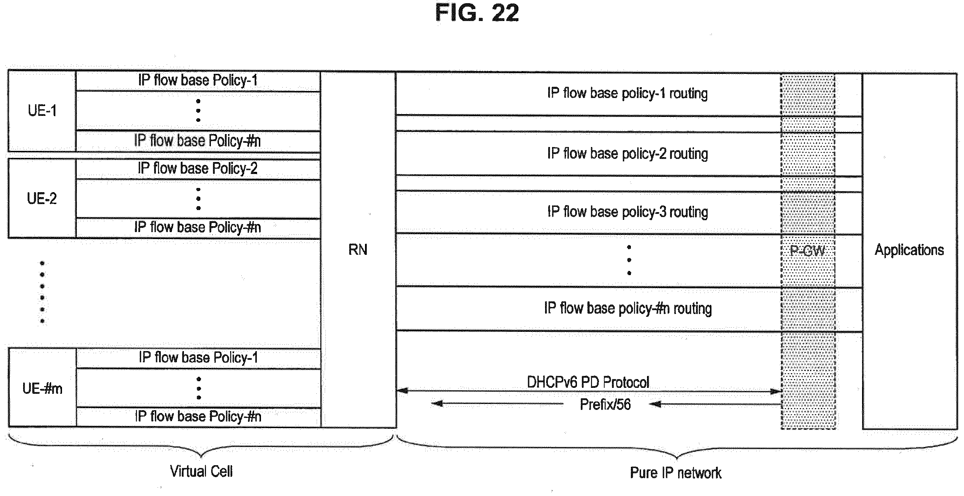

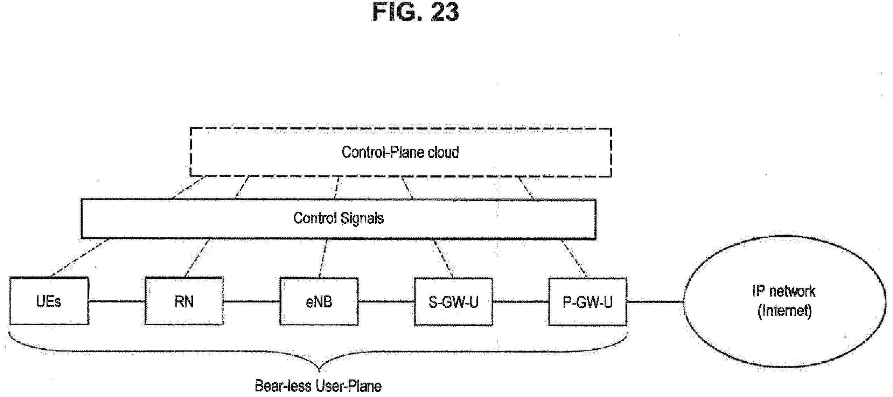

The above-described proposed protocol can also be applied to an architecture in a next-generation network that is not compatible with EPC of existing 3GPP. Such an architecture will be described with reference to FIGS. 22 and 23.

FIGS. 22 and 23 are diagrams illustrating an example of an architecture of a next-generation network. FIG. 22 illustrates an architecture of a bearerless network that is realized by a so-called pure IP network. In this case, an IP flow is in charge of a role of the bearer. In this architecture, it is possible to realize IP transmittivity of the group of UEs connected to the RN without the mechanism such as a mobile IP, by commonly setting the prefix portions. FIG. 23 illustrates an architecture in which a control plane and a user plane are separated by utilizing a cloud.

### <3.6. Supplement>

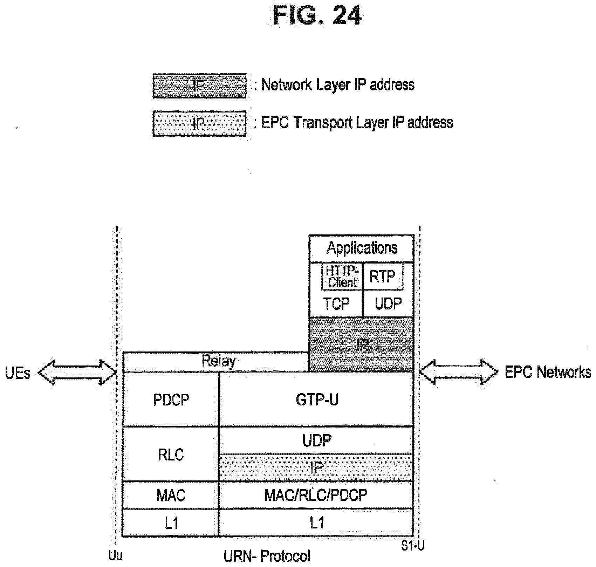

FIG. 24 is a diagram illustrating an example of a protocol stack in an RN according to the present embodiment. As illustrated in FIG. 12, the RN has an IP address in the network layer in addition to the IP address in the EPC transport layer. The RN is referred to as a user-equipment-relay-node (URN) in some cases since the RN also functions as a UE.

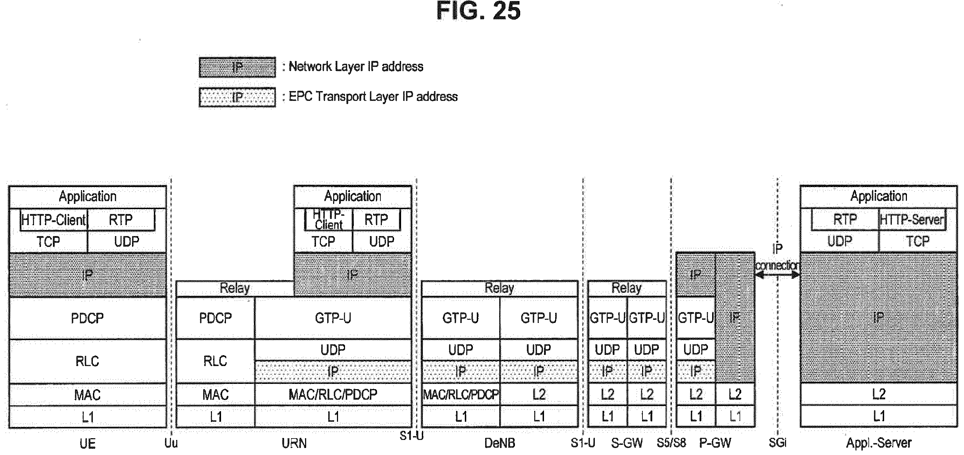

FIG. 25 is a diagram illustrating an example of a protocol stack in communication between the UE and a server on the PDN through the RN according to the embodiment. As illustrated in FIG. 25, the RN is connected to the DeNB and performs communication with an application server on the PDN through an EPC (the S-GW and the P-GW). In addition, the RN relays wireless communication between the subordinate UE and the DeNB that is a connection destination.

### <<4. Use case>>

The aforementioned proposed protocol can be applied to a variety of use cases.

### (1) Realization of network service during movement

In a case in which the RN is mounted on a public transportation such as a bus or a train, for example, theRN can solve discontinuity and the like of access, which accompany the movement, by providing local content to the UEs of the passengers from a server that is connected to the RN. In addition, it is possible to realize moving transmittivity for services from the DeNB to which the RN is connected or a server connected to an entity on a core network. The server connected to the RN is effectively used for services that require a short delay time. In addition, in a case in which a nested virtual cell formed by an RN of a passenger is connected to the RN mounted on the public transportation, continuity of the nested virtual cell to the network is continued by only the RN of the passenger performing connection processing. Since a situation in which all the UEs on board perform processing of establishing connection to the network is avoided, an improvement in wireless utilization efficiency is realized.

### (2) Improvement in wireless utilization efficiency in environment in which UEs are crowded

In an environment in which the density of the UEs is significantly high, such as in downtown or during an event, the improvement in the wireless utilization efficiency is realized, and more UEs can be accommodated by providing the UEs RN functions and realizing moving transmittivity of other UEs in the surroundings.

### (3) Application to security system

It is possible to provide an advanced security system to a moving environment by a camera being connected to the RN that is mounted on a moving transportation. For example, an advanced security system is realized by accumulating captured images in a server connected to the RN, performing data analysis thereon, and as needed, performing, by the RN, communication with an entity in the core network or a calculation resource on the cloud.

### (4) Realization of dynamic operating service of cognitive wireless system

A cognitive wireless system is a system that provides an access network utilizing frequencies by utilizing frequency database for managing available frequencies for the respective areas. For example, it is considered that functions as an access point (that is, a base station) of the cognitive wireless system are mounted on the RN. In that case, the RN can specify an available frequency at a current position from the frequency database by utilizing location information (GPS information, wireless base station information, or the like) and then provides a virtual cell by utilizing the frequency. In addition, it also becomes possible to provide a network access service via the URN 2 or a device-to-device (D2D) communication service between the UE and the UE or between the RN and the UE.

### (5) Realization of dynamic operating services by drone

It is possible to provide wireless services to various device groups in a flight area by mounting functions of the RN providing a virtual cell on a drone. The drone that functions as the RN will also be referred to as a king drone in the following description. The king drone may have a function of a cognitive wireless system and may specify an available frequency in a flying area through communication with a frequency database. The device groups connected to the virtual cell may be sensor devices, for example. In regard to agriculture, for example, a geographical feature sensor, a temperature sensor, a humidity sensor, a maturity sensor, and the like may be arranged in a vegetable farm, a king drone may flow above the farm, and network layer IP addresses may be assigned to the group of sensor devices. Then, the king drone may acquire sensor information from the group of sensor devices every time the king drone flies over the area and may relay the sensor information to a server on a cloud. Also, in regard to areas in which people gather in limited periods, such as an event site or a swimming beach, a king drone may fly over the area, assign network layer IP addresses to LTE devices in the area, and provide services in corporation with applications on the terminals. The king drone may invalidate (that is, recover) the distributed network layer IP addresses after end of the period of the event and the like.

### (6) Realization of in-vehicle sensor system

It is possible to collect sensor information acquired by various sensors (a road surface sensor, a radar, and the like) for monitoring the inside or the outside of a vehicle and to accumulate and analyze the sensor information in the vehicle by mounting the functions of the RN on the vehicle. In addition, the RN may be connected to the server on a cloud as needed and perform more advanced analysis processing in corporation with big data and the like. It is possible to feed back the analysis service to the vehicle, the RN, or the sensor even during the movement of the vehicle by realizing moving transmittivity of the virtual cell.

### (7) Realization of long-distance wireless connection service

An increase in coverage is expected by realizing the virtual cells with the nested structure and through so-called multiple-hop connection (that is, connection of the virtual cells in series in a row), in which hops of RN-UE are connected in series in a row.

### <<5. Application examples>>

The technology of the present disclosure can be applied to various products. For example, the core network node (such as P-GW, S-GW, MME, or the like) may be realized as a server of any type such as a tower server, a rack server, a blade server, or the like. In addition, at least some of these constituent elements of the core network node may be implemented by a control module mounted in a server (e.g., an integrated circuit module configured in one die or a card or a blade inserted into a slot of a blade server).

Further, the DeNB may be realized as any type of evolved node B (eNB), for example, a macro eNB, a small eNB, or the like. A small eNB may be an eNB that covers a smaller cell than a macro cell, such as a pico eNB, a micro eNB, or a home (femto) eNB. Alternatively, the DeNB may be realized as another type of base station such as a node B or a base transceiver station (BTS). The DeNB may include a main body that controls wireless communication (also referred to as a base station device) and one or more remote radio heads (RRHs) disposed in a different place from the main body. In addition, various types of terminals to be described below may operate as the DeNB by temporarily or semi-permanently executing the base station function. Further, at least a part of constituent elements of the DeNB may be realized in the base station device or a module for the base station device.

In addition, the UE and the RN may be realized as, for example, a mobile terminal such as a smartphone, a tablet personal computer (PC), a notebook PC, a portable game terminal, a portable/dongle type mobile router, or a digital camera, or an in-vehicle terminal such as a car navigation device. In addition, the UE and the RN may be realized as a terminal that performs machine-to-machine (M2M) communication (also referred to as a machine type communication (MTC) terminal). Furthermore, at least a part of the constituent elements of the UE and the RN may be realized in a module mounted in such a terminal (for example, an integrated circuit module configured in one die).

### <5.1. Application example with regard to core network node>

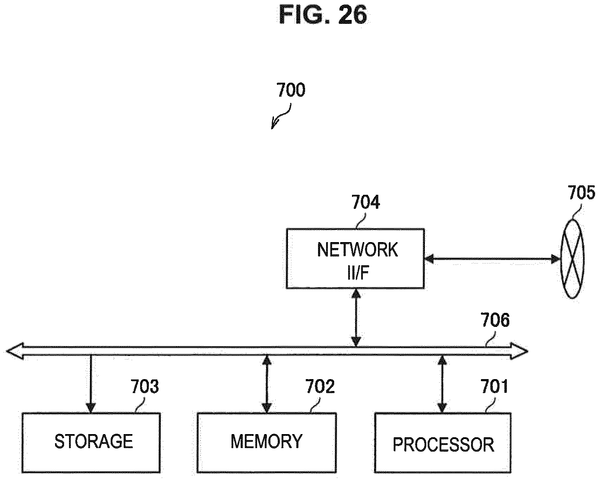

FIG. 26 is a block diagram illustrating an example of a schematic configuration of a server 700 to which the technology of the present disclosure may be applied. The server 700 includes a processor 701, a memory 702, a storage 703, a network interface 704, and a bus 706.

The processor 701 may be, for example, a central processing unit (CPU) or a digital signal processor (DSP) and controls various functions of the server 700. The memory 702 includes a random access memory (RAM) and a read only memory (ROM) and stores programs executed by the processor 701 and data. The storage 703 can include a storage medium such as a semiconductor memory or a hard disk.

The network interface 704 is a wired communication interface for connecting the server 700 to a wired communication network 705. The wired communication network 705 may be a core network such as an evolved packet core (EPC) or a packet data network (PDN) such as the Internet.

The bus 706 connects the processor 701, the memory 702, the storage 703, and the network interface 704 to each other. The bus 706 may include two or more buses that operate at different speeds (e.g., a high-speed bus and a low-speed bus).

In the server 700 illustrated in FIG. 26, one or more constituent elements included in the core network node (such as P-GW, S-GW, MME, or the like) described with reference to FIG. 5 (the control unit 430, for example) may be implemented by the processor 701. As an example, a program for causing a processor to function as the one or more constituent elements (i.e., a program for causing a processor to execute operations of the one or more constituent elements) may be installed in the server 700 and the processor 701 may execute the program. As another example, a module including the processor 701 and the memory 702 may be mounted in the server 700 and the one or more constituent elements may be implemented by the module. In this case, the module may store a program for causing a processor to function as the one or more constituent elements in the memory 702 and the program may be executed by the processor 701. The server 700 or the module may be provided as devices having the above-described one or more constituent elements as described above, or the program for causing a processor to function as the one or more constituent elements may be provided. In addition, a readable recording medium in which the program is recorded may be provided.

In addition, in the server 700 shown in FIG. 26, the network communication unit 410 described, for example, with reference to FIG. 5 may be implemented by the network interface 704. Moreover, the storage unit 420 may be implemented by the memory 702 and/or the storage 703.

### <5.2. Application example with regard to base station>

### (First application example)

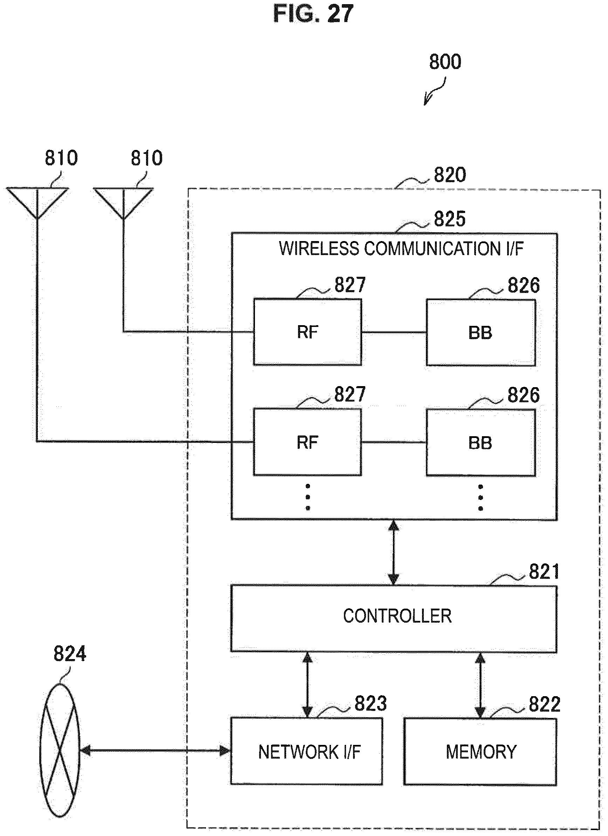

FIG. 27 is a block diagram illustrating a first example of a schematic configuration of an eNB to which the technology of the present disclosure may be applied. An eNB 800 includes one or more antennas 810 and a base station device 820. Each antenna 810 and the base station device 820 may be connected to each other via an RF cable.

Each of the antennas 810 includes a single or multiple antenna elements (such as multiple antenna elements included in an MIMO antenna), and is used for the base station device 820 to transmit and receive radio signals. The eNB 800 may include the multiple antennas 810, as illustrated in FIG. 27. For example, the multiple antennas 810 may be compatible with multiple frequency bands used by the eNB 800. Although FIG. 27 illustrates the example in which the eNB 800 includes the multiple antennas 810, the eNB 800 may also include a single antenna 810.

The base station device 820 includes a controller 821, a memory 822, a network interface 823, and a wireless communication interface 825.

The controller 821 may be, for example, a CPU or a DSP, and operates various functions of a higher layer of the base station device 820. For example, the controller 821 generates a data packet from data in signals processed by the wireless communication interface 825, and transfers the generated packet via the network interface 823. The controller 821 may bundle data from multiple base band processors to generate the bundled packet, and transfer the generated bundled packet. The controller 821 may have logical functions of performing control such as radio resource control, radio bearer control, mobility management, admission control, and scheduling. The control may be performed in corporation with an eNB or a core network node in the vicinity. The memory 822 includes RAM and ROM, and stores a program that is executed by the controller 821, and various types of control data (such as a terminal list, transmission power data, and scheduling data).

The network interface 823 is a communication interface for connecting the base station device 820 to a core network 824. The controller 821 may communicate with a core network node or another eNB via the network interface 823. In this case, the eNB 800 may be connected to a core network node or another eNB through a logical interface (e.g. S1 interface or X2 interface). The network interface 823 may also be a wired communication interface or a wireless communication interface for wireless backhaul. If the network interface 823 is a wireless communication interface, the network interface 823 may use a higher frequency band for wireless communication than a frequency band used by the wireless communication interface 825.

The wireless communication interface 825 supports any cellular communication scheme such as Long Term Evolution (LTE) and LTE-Advanced, and provides radio connection to a terminal positioned in a cell of the eNB 800 via the antenna 810. The wireless communication interface 825 may typically include, for example, a baseband (BB) processor 826 and an RF circuit 827. The BB processor 826 may perform, for example, encoding/decoding, modulating/demodulating, and multiplexing/demultiplexing, and performs various types of signal processing of layers (such as L1, medium access control (MAC), radio link control (RLC), and a packet data convergence protocol (PDCP)). The BB processor 826 may have a part or all of the above-described logical functions instead of the controller 821. The BB processor 826 may be a memory that stores a communication control program, or a module that includes a processor and a related circuit configured to execute the program. Updating the program may allow the functions of the BB processor 826 to be changed. The module may be a card or a blade that is inserted into a slot of the base station device 820. Alternatively, the module may also be a chip that is mounted on the card or the blade. Meanwhile, the RF circuit 827 may include, for example, a mixer, a filter, and an amplifier, and transmits and receives radio signals via the antenna 810.

The wireless communication interface 825 may include the multiple BB processors 826, as illustrated in FIG. 27. For example, the multiple BB processors 826 may be compatible with multiple frequency bands used by the eNB 800. The wireless communication interface 825 may include the multiple RF circuits 827, as illustrated in FIG. 27. For example, the multiple RF circuits 827 may be compatible with multiple antenna elements. Although FIG. 27 illustrates the example in which the wireless communication interface 825 includes the multiple BB processors 826 and the multiple RF circuits 827, the wireless communication interface 825 may also include a single BB processor 826 or a single RF circuit 827.

In the eNB 800 shown in FIG. 27, one or more constituent elements included in the DeNB (the control unit 350, for example) described with reference to FIG. 4 may be implemented by the wireless communication interface 825. Alternatively, at least some of these constituent elements may be implemented by the controller 821. As an example, a module which includes a part (for example, the BB processor 826) or all of the wireless communication interface 825 and/or the controller 821 may be mounted in eNB 800, and the one or more constituent elements may be implemented by the module. In this case, the module may store a program for causing the processor to function as the one or more constituent elements (i.e., a program for causing the processor to execute operations of the one or more constituent elements) and may execute the program. As another example, the program for causing the processor to function as the one or more constituent elements may be installed in the eNB 800, and the wireless communication interface 825 (for example, the BB processor 826) and/or the controller 821 may execute the program. As described above, the eNB 800, the base station device 820, or the module may be provided as a device which includes the one or more constituent elements, and the program for causing the processor to function as the one or more constituent elements may be provided. In addition, a readable recording medium in which the program is recorded may be provided.

In addition, in the eNB 800 shown in FIG. 27, the wireless communication unit 320 described with reference to FIG. 4 may be mounted on the wireless communication interface 825 (for example, the RF circuit 827). In addition, the antenna unit 310 may be mounted on the antenna 810. In addition, the network communication unit 330 may be mounted on the controller 821 and/or the network interface 823. In addition, the storage unit 340 may be mounted on the memory 822.

### (Second application example)

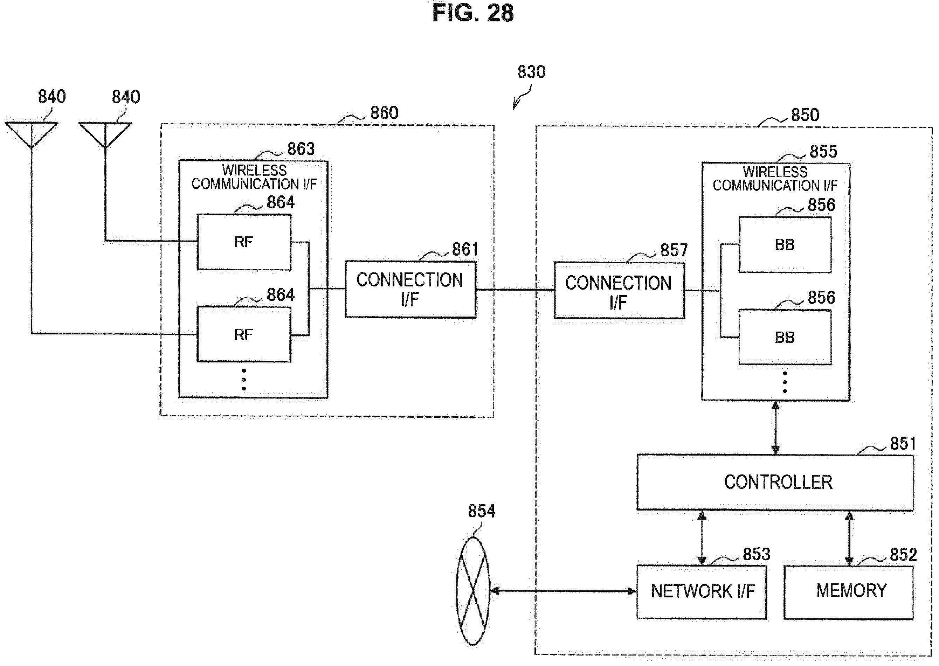

FIG. 28 is a block diagram illustrating a second example of a schematic configuration of an eNB to which the technology of the present disclosure may be applied. An eNB 830 includes one or more antennas 840, a base station device 850, and an RRH 860. Each antenna 840 and the RRH 860 may be connected to each other via an RF cable. The base station device 850 and the RRH 860 may be connected to each other via a high speed line such as an optical fiber cable.

Each of the antennas 840 includes a single or multiple antenna elements (such as multiple antenna elements included in an MIMO antenna), and is used for the RRH 860 to transmit and receive radio signals. The eNB 830 may include the multiple antennas 840, as illustrated in FIG. 28. For example, the multiple antennas 840 may be compatible with multiple frequency bands used by the eNB 830. Although FIG. 28 illustrates the example in which the eNB 830 includes the multiple antennas 840, the eNB 830 may also include a single antenna 840.

The base station device 850 includes a controller 851, a memory 852, a network interface 853, a wireless communication interface 855, and a connection interface 857. The controller 851, the memory 852, and the network interface 853 are the same as the controller 821, the memory 822, and the network interface 823 described with reference to FIG. 27.

The wireless communication interface 855 supports any cellular communication scheme such as LTE and LTE-Advanced, and provides wireless communication to a terminal positioned in a sector corresponding to the RRH 860 via the RRH 860 and the antenna 840. The wireless communication interface 855 may typically include, for example, a BB processor 856. The BB processor 856 is the same as the BB processor 826 described with reference to FIG. 27, except the BB processor 856 is connected to the RF circuit 864 of the RRH 860 via the connection interface 857. The wireless communication interface 855 may include the multiple BB processors 856, as illustrated in FIG. 28. For example, the multiple BB processors 856 may be compatible with multiple frequency bands used by the eNB 830. Although FIG. 28 illustrates the example in which the wireless communication interface 855 includes the multiple BB processors 856, the wireless communication interface 855 may also include a single BB processor 856.

The connection interface 857 is an interface for connecting the base station device 850 (wireless communication interface 855) to the RRH 860. The connection interface 857 may also be a communication module for communication in the above-described high speed line that connects the base station device 850 (wireless communication interface 855) to the RRH 860.

The RRH 860 includes a connection interface 861 and a wireless communication interface 863.

The connection interface 861 is an interface for connecting the RRH 860 (wireless communication interface 863) to the base station device 850. The connection interface 861 may also be a communication module for communication in the above-described high speed line.

The wireless communication interface 863 transmits and receives radio signals via the antenna 840. The wireless communication interface 863 may typically include, for example, the RF circuit 864. The RF circuit 864 may include, for example, a mixer, a filter, and an amplifier, and transmits and receives radio signals via the antenna 840. The wireless communication interface 863 may include multiple RF circuits 864, as illustrated in FIG. 28. For example, the multiple RF circuits 864 may support multiple antenna elements. Although FIG. 28 illustrates the example in which the wireless communication interface 863 includes the multiple RF circuits 864, the wireless communication interface 863 may also include a single RF circuit 864.

In the eNB 830 shown in FIG. 28, one or more constituent elements included in the DeNB (the control unit 350, for example) described with reference to FIG. 4 may be implemented by the wireless communication interface 855 and/or the wireless communication interface 863. Alternatively, at least some of these constituent elements may be implemented by the controller 851. As an example, a module which includes a part (for example, the BB processor 856) or all of the wireless communication interface 855 and/or the controller 851 may be mounted in eNB 830, and the one or more constituent elements may be implemented by the module. In this case, the module may store a program for causing the processor to function as the one or more constituent elements (i.e., a program for causing the processor to execute operations of the one or more constituent elements) and may execute the program. As another example, the program for causing the processor to function as the one or more constituent elements may be installed in the eNB 830, and the wireless communication interface 855 (for example, the BB processor 856) and/or the controller 851 may execute the program. As described above, the eNB 830, the base station device 850, or the module may be provided as a device which includes the one or more constituent elements, and the program for causing the processor to function as the one or more constituent elements may be provided. In addition, a readable recording medium in which the program is recorded may be provided.

In addition, in the eNB 800 shown in FIG. 28, for example, the wireless communication unit 320 described with reference to FIG. 4 may be mounted on the wireless communication interface 863 (for example, the RF circuit 864). In addition, the antenna unit 310 may be mounted on the antenna 840. In addition, the network communication unit 330 may be mounted on the controller 851 and/or the network interface 853. In addition, the storage unit 340 may be mounted on the memory 852.

### <5.3. Application example with regard to terminal device>

### (First application example)

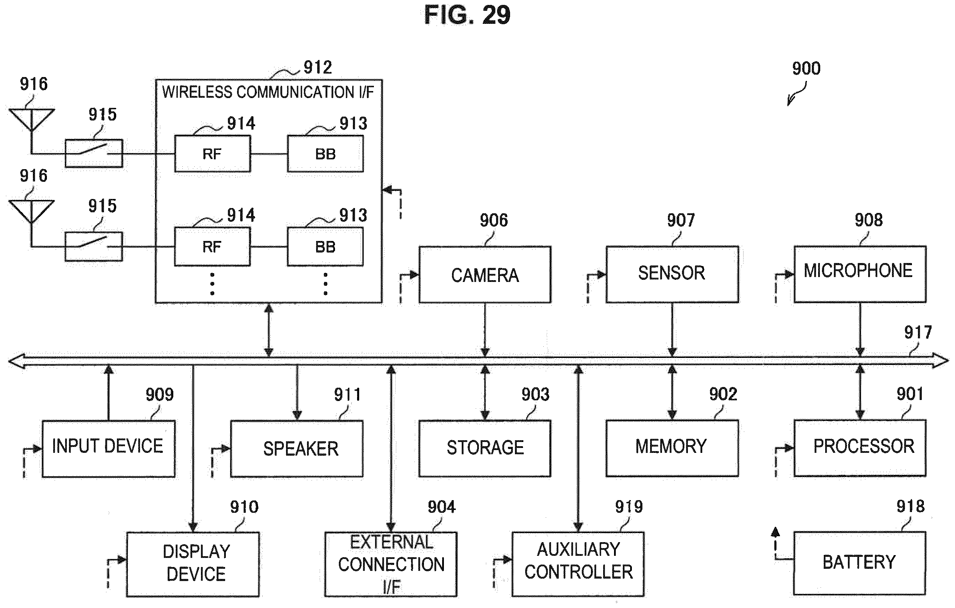

FIG. 29 is a block diagram illustrating an example of a schematic configuration of a smartphone 900 to which the technology of the present disclosure may be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smartphone 900. The memory 902 includes RAM and ROM, and stores a program that is executed by the processor 901, and data. The storage 903 may include a storage medium such as a semiconductor memory and a hard disk. The external connection interface 904 is an interface for connecting an external device such as a memory card and a universal serial bus (USB) device to the smartphone 900.

The camera 906 includes an image sensor such as a charge coupled device (CCD) and a complementary metal oxide semiconductor (CMOS), and generates a captured image. The sensor 907 may include a group of sensors such as a measurement sensor, a gyro sensor, a geomagnetic sensor, and an acceleration sensor. The microphone 908 converts sounds that are input to the smartphone 900 to audio signals. The input dcvicc 909 includes, for example, a touch sensor configured to detect touch onto a screen of the display device 910, a keypad, a keyboard, a button, or a switch, and receives an operation or an information input from a user. The display device 910 includes a screen such as a liquid crystal display (LCD) and an organic light-emitting diode (OLED) display, and displays an output image of the smartphone 900. The speaker 911 converts audio signals that are output from the smartphone 900 to sounds.

The wireless communication interface 912 supports any cellular communication scheme such as LTE and LTE-Advanced, and performs wireless communication. The wireless communication interface 912 may typically include, for example, a BB processor 913 and an RF circuit 914. The BB processor 913 may perform, for example, encoding/decoding, modulating/demodulating, and multiplexing/demultiplexing, and performs various types of signal processing for wireless communication. Meanwhile, the RF circuit 914 may include, for example, a mixer, a filter, and an amplifier, and transmits and receives radio signals via the antenna 916. The wireless communication interface 912 may also be a one chip module that has the BB processor 913 and the RF circuit 914 integrated thereon. The wireless communication interface 912 may include the multiple BB processors 913 and the multiple RF circuits 914, as illustrated in FIG. 29. Although FIG. 29 illustrates the example in which the wireless communication interface 912 includes the multiple BB processors 913 and the multiple RF circuits 914, the wireless communication interface 912 may also include a single BB processor 913 or a single RF circuit 914.

Furthermore, in addition to a cellular communication scheme, the wireless communication interface 912 may support another type of wireless communication scheme such as a short-distance wireless communication scheme, a near field communication scheme, and a wireless local area network (LAN) scheme. In that case, the wireless communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the wireless communication interface 912.

Each of the antennas 916 includes a single or multiple antenna elements (such as multiple antenna elements included in an MIMO antenna), and is used for the wireless communication interface 912 to transmit and receive radio signals. The smartphone 900 may include the multiple antennas 916, as illustrated in FIG. 29. Although FIG. 29 illustrates the example in which the smartphone 900 includes the multiple antennas 916, the smartphone 900 may also include a single antenna 916.

Furthermore, the smartphone 900 may include the antenna 916 for each wireless communication scheme. In that case, the antenna switches 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies power to blocks of the smartphone 900 illustrated in FIG. 29 via feeder lines, which are partially shown as dashed lines in the figure. The auxiliary controller 919 operates a minimum necessary function of the smartphone 900, for example, in a sleep mode.

In the smartphone 900 shown in FIG. 29, one or more constituent elements included in the UE described with reference to FIG. 2 or the RN described with reference to FIG. 3 (the control unit 140 or the control unit 240) may be implemented by the wireless communication interface 912. Alternatively, at least some of these constituent elements may be implemented by the processor 901 or the auxiliary controller 919. As an example, a module which includes a part (for example, the BB processor 913) or all of the wireless communication interface 912, the processor 901 and/or the auxiliary controller 919 may be mounted in the smartphone 900, and the one or more constituent elements may be implemented by the module. In this case, the module may store a program for causing the processor to function as the one or more constituent elements (i.e., a program for causing the processor to execute operations of the one or more constituent elements) and may execute the program. As another example, the program for causing the processor to function as the one or more constituent elements may be installed in the smartphone 900, and the wireless communication interface 912 (for example, the BB processor 913), the processor 901 and/or the auxiliary controller 919 may execute the program. As described above, the smartphone 900 or the module may be provided as a device which includes the one or more constituent elements, and the program for causing the processor to function as the one or more constituent elements may be provided. In addition, a readable recording medium in which the program is recorded may be provided.

In addition, in the smartphone 900 shown in FIG. 29, the wireless communication unit 120 or the wireless communication unit 220 described with reference to FIGS. 2 or 3, for example, may be implemented by the wireless communication interface 912 (for example, the RF circuit 914). Moreover, the antenna unit 110 or the antenna unit 210 may be implemented by the antenna 916. Moreover, the storage unit 130 or the storage unit 230 may be implemented by the memory 902.

### (Second application example)

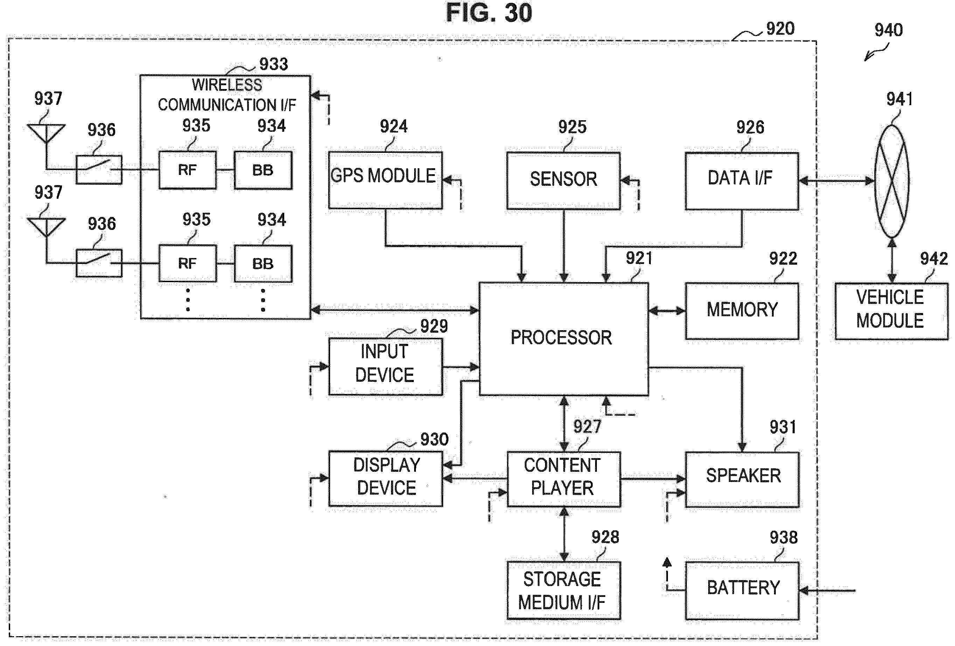

FIG. 30 is a block diagram illustrating an example of a schematic configuration of a car navigation device 920 to which the technology of the present disclosure may be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or a SoC, and controls a navigation function and another function of the car navigation device 920. The memory 922 includes RAM and ROM, and stores a program that is executed by the processor 921, and data.

The GPS module 924 uses GPS signals received from a GPS satellite to measure a position (such as latitude, longitude, and altitude) of the car navigation device 920. The sensor 925 may include a group of sensors such as a gyro sensor, a geomagnetic sensor, and a barometric sensor. The data interface 926 is connected to, for example, an in-vehicle network 941 via a terminal that is not shown, and acquires data generated by the vehicle, such as vehicle speed data.

The content player 927 reproduces content stored in a storage medium (such as a CD and a DVD) that is inserted into the storage medium interface 928. The input device 929 includes, for example, a touch sensor configured to detect touch onto a screen of the display device 930, a button, or a switch, and receives an operation or an information input from a user. The display device 930 includes a screen such as an LCD or an OLED display, and displays an image of the navigation function or content that is reproduced. The speaker 931 outputs sounds of the navigation function or the content that is reproduced.

The wireless communication interface 933 supports any cellular communication scheme such as LET and LTE-Advanced, and performs wireless communication. The wireless communication interface 933 may typically include, for example, a BB processor 934 and an RF circuit 935. The BB processor 934 may perform, for example, encoding/decoding, modulating/demodulating, and multiplexing/demultiplexing, and performs various types of signal processing for wireless communication. Meanwhile, the RF circuit 935 may include, for example, a mixer, a filter, and an amplifier, and transmits and receives radio signals via the antenna 937. The wireless communication interface 933 may be a one chip module having the BB processor 934 and the RF circuit 935 integrated thereon. The wireless communication interface 933 may include the multiple BB processors 934 and the multiple RF circuits 935, as illustrated in FIG. 30. Although FIG. 30 illustrates the example in which the wireless communication interface 933 includes the multiple BB processors 934 and the multiple RF circuits 935, the wireless communication interface 933 may also include a single BB processor 934 or a single RF circuit 935.

Furthermore, in addition to a cellular communication scheme, the wireless communication interface 933 may support another type of wireless communication scheme such as a short-distance wireless communication scheme, a near field communication scheme, and a wireless LAN scheme. In that case, the wireless communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the wireless communication interface 933.

Each of the antennas 937 includes a single or multiple antenna elements (such as multiple antenna elements included in an MIMO antenna), and is used for the wireless communication interface 933 to transmit and receive radio signals. The car navigation device 920 may include the multiple antennas 937, as illustrated in FIG. 30. Although FIG. 30 illustrates the example in which the car navigation device 920 includes the multiple antennas 937, the car navigation device 920 may also include a single antenna 937.

Furthermore, the car navigation device 920 may include the antenna 937 for each wireless communication scheme. In that case, the antenna switches 936 may be omitted from the configuration of the car navigation device 920.

The battery 938 supplies power to blocks of the car navigation device 920 illustrated in FIG. 30 via feeder lines that are partially shown as dashed lines in the figure. The battery 938 accumulates power supplied from the vehicle.

In the car navigation device 920 shown in FIG. 30, one or more constituent elements included in the UE described with reference to FIG. 2 or the RN described with reference to FIG. 3 (the control unit 140 or the control unit 240) may be implemented by the wireless communication interface 933. Alternatively, at least some of these constituent elements may be implemented by the processor 921. As an example, a module which includes a part (for example, the BB processor 934) or all of the wireless communication interface 933 and/or the processor 921 may be mounted in the car navigation device 920, and the one or more constituent elements may be implemented by the module. In this case, the module may store a program for causing the processor to function as the one or more constituent elements (i.e., a program for causing the processor to execute operations of the one or more constituent elements) and may execute the program. As another example, the program for causing the processor to function as the one or more constituent elements may be installed in the car navigation device 920, and the wireless communication interface 933 (for example, the BB processor 934) and/or the processor 921 may execute the program. As described above, the car navigation device 920 or the module may be provided as a device which includes the one or more constituent elements, and the program for causing the processor to function as the one or more constituent elements may be provided. In addition, a readable recording medium in which the program is recorded may be provided.

In addition, in the car navigation device 920 shown in FIG. 30, the wireless communication unit 120 or the wireless communication unit 220 described with reference to FIGS. 2 or 3, for example, may be implemented by the wireless communication interface 933 (for example, the RF circuit 935). Moreover, the antenna unit 110 or the antenna unit 210 may be implemented by the antenna 937. Moreover, the storage unit 130 or the storage unit 230 may be implemented by the memory 922.

The technology of the present disclosure may also be realized as an in-vehicle system (or a vehicle) 940 including one or more blocks of the car navigation device 920, the in-vehicle network 941, and a vehicle module 942. In other words, the in-vehicle system (or a vehicle) 940 may be provided as a device which includes the control unit 140 or the control unit 240. The vehicle module 942 generates vehicle data such as vehicle speed, engine speed, and trouble information, and outputs the generated data to the in-vehicle network 941.

### <<6. Conclusion>>

The embodiment of the present disclosure has been described above in detail with reference to FIGS. 1 to 30. As described above, an RN stores a conversion table of address information, and converts and relays transmission destination information or transmission source information of a packet transmitted and received between an upstream node of a connection destination and a downstream node of a subordinate on a basis of the stored conversion table. Thus, the RN can aggregate packets transmitted and received by a downstream node connected to the RN to the RN, and thus efficiency of information processing related to the RN is realized.

Hereinafter, an advantageous effect of the proposed protocol will be described in detail.

The RN stores an address conversion table. Thus, an amount of information of the routing table stored by the DeNB, the S-GW, and the P-GW does not depend on the number of UEs or RNs inside a moving cell. Specifically, these nodes merely store the first and second entries of Tables 2A, 2B, and 2C. In other words, the number of UEs or RNs inside the moving cell does not contribute to an increase in an amount of information managed by the DeNB, the S-GW, and the P-. GW. In an actual use case, since many RNs or UEs which have acquired the IPv6 addresses are assumed to be connected to the moving cell, such a property is important. In this way, efficiency of information processing related to the RN is realized.

In addition, the fact that the RN stores an address conversion table also contributes to efficiency of information processing related to handover.

For example, when the RN is handed over between DeNBs, only the RN which has been handed over may perform signaling and signaling of the downstream UE or RN is unnecessary. Therefore, a signaling traffic at the time of the handover of the RN does not increase due to the number of UEs or RNs inside the moving cell.

Further, since only an RN performs signaling without depending on the number of UEs connected to the RN at the time of the handover of a moving cell formed by the RN, it is possible to considerably reduce the signaling of the UEs. Thus, efficiency of wireless resources and shortening of a delay time until communication start can be expected. Then, this can support low delay in new radio network technology (RAT) of the 5G age which will be examined in the future.

In addition, it is possible to suppress an amount of information exchanged between nodes by the DeNB, the S-GW, and the P-GW at the time of handover of an RN. For example, in a case where the RN 1 is handed over from the DeNB1 to the DeNB 2, the S-GW 1 transmits routing information to the DeNB 2 in order to update a routing table of the DeNB 2. The routing information to be transmitted is constant without depending on the number of UEs or RNs connected to a moving cell of the RN which is handed over. Specifically, only information regarding the first and second entries of Tables 2A, 2B and 2C is transmitted. Thus, the number of entries of the routing table updated at the time of the handover of the RN can be suppressed to two at most in each node of the P-GW, the S-GW, and the DeNB.

The P-GW stores the address conversion table. Thus, an application operating on an RN or a UE inside a moving cell can wait for communication start.

The RN can make collectively attach requests of UEs or RNs connected to a moving cell. Thus, it is possible to reduce the number of signaling packets.

In addition, the proposed protocol is a protocol suitable for the architecture of 3GPP. That is, sharing of the functions of the P-GW, the S-GW, the MME, the eNB, the DeNB, the RN, and the UE is maintained, the interfaces determined between these nodes are maintained, and message sequences determined between these nodes are maintained. Then, since tunneling is not used other than tunneling used in 3GPP in the proposed protocol, overhead of a header does not increase.

In addition, a nested moving cell is realized using DHCP-PD. Then, a UE which has acquired an IPv6 address can continue communication even after connected to a moving cell.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

In addition, the processing described by using the flowcharts and the sequence diagrams in this specification may not be necessarily executed in the orders described in the drawings. Some processing steps may be executed in parallel. In addition, additional processing steps may be employed, and a part of the processing steps may be omitted.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) A relay device including:
   a storage unit configured to store a first conversion table of address information; and
   a control unit configured to convert and relay transmission destination information or transmission source information of a packet transmitted and received between an upstream node of a connection destination and a downstream node of a subordinate on a basis of the first conversion table stored in the storage unit.
(2) The relay device according to (1), in which the control unit converts the address information of the downstream node among the transmission destination information and the transmission source information.
(3) The relay device according to (1) or (2), in which the first conversion table includes information in which address information of the downstream node is associated with address information of the relay device corresponding to the downstream node.
(4) The relay device according to (2) or (3), in which the control unit converts an IP address of the transmission destination information of a packet from the upstream node to the downstream node into an IP address of the downstream node.
(5) The relay device according to any one of (2) to (4), in which the control unit converts a port number of the transmission destination information of a packet from the upstream node to the downstream node into a port number of the downstream node in accordance with an application operating on a most downstream node.
(6) The relay device according to any one of (2) to (5), in which the control unit converts an IP address of the transmission source information of a packet from the downstream node to the upstream node into an IP address of the relay device.
(7) The relay device according to any one of (2) to (6), in which the control unit converts a port number of the transmission source information of a packet from the downstream node to the upstream node into a port number of the relay device in accordance with an application operating on a most downstream node.
(8) The relay device according to any one of (1) to (7), in which the control unit identifies whether a packet to be relayed is a packet from the upstream node to the downstream node or a packet from the downstream node to the upstream node.
(9) The relay device according to any one of (1) to (8), in which a packet data network gateway (P-GW) converts the transmission destination information or the transmission source information of the packet on a basis of a second conversion table of address information stored by the P-GW.
(10) The relay device according to (9), in which the second conversion table includes information in which address information of a most downstream node is associated with address information of the relay device corresponding to the most downstream node.
(11) The relay device according to any one of (9) and (10), in which the control unit transmits a message requesting registration of the second conversion table to the P-GW.
(12) The relay device according to any one of (1) to (11), in which each node from a base station to a P-GW stores a routing table in which the transmission destination information is associated with a transfer destination, and relays the packet on a basis of the routing table.
(13) The relay device according to any one of (1) to (12), in which an MME stores a management table in which identification information and address information of a node attached to a network are associated with address information of an upstream node of the node.
(14) The relay device according to any one of (1) to (13), in which the control unit receives allocation of a prefix of an IP address from a P-GW in a case where the IP address is not acquired.
(15) The relay device according to any one of (1) to (14), in which the control unit transmits information indicating placement of a moving cell formed by the relay device.
(16) The relay device according to any one of (1) to (15), in which the control unit controls a transmission timing of an attach request related to the attached downstream node.
(17) The relay device according to (16), in which the control unit collectively transmits the attach request related to one or more attached downstream nodes, to the upstream node.
(18) A terminal device including:
   a control unit configured to transmit a message requesting an upstream node which converts transmission destination information or transmission source information of a packet to be relayed, on a basis of a stored first conversion table of address information, to register the first conversion table.
(19) A communication method including:
   storing a first conversion table of address information; and
   converting and relaying, by a processor, transmission destination information or transmission source information of a packet transmitted and received between an upstream node of a connection destination and a downstream node of a subordinate on a basis of the stored first conversion table.
(20) A communication method including:
   transmitting, by a processor, a message requesting an upstream node which converts transmission destination information or transmission source information of a packet to be relayed, on a basis of a stored first conversion table of address information, to register the first conversion table.

### Reference Signs List

- UE: terminal device
- RN: relay device
- eNB,: DeNB base station
- P-GW, S-GW, MME: core network node
- 110: antenna unit
- 120: wireless communication unit
- 130: storage unit
- 140: control unit
- 210: antenna unit
- 220: wireless communication unit
- 230: storage unit
- 240: control unit
- 310: antenna unit
- 320: wireless communication unit
- 330: network communication unit
- 340: storage unit
- 350: control unit
- 410: network communication unit
- 420: storage unit
- 430: control unit

## Claims

1. A relay device comprising:
a storage unit configured to store a first conversion table of address information; and
a control unit configured to convert and relay transmission destination information or transmission source information of a packet transmitted and received between an upstream node of a connection destination and a downstream node of a subordinate on a basis of the first conversion table stored in the storage unit.

2. The relay device according to claim 1, wherein the control unit converts the address information of the downstream node among the transmission destination information and the transmission source information.

3. The relay device according to claim 1, wherein the first conversion table includes information in which address information of the downstream node is associated with address information of the relay device corresponding to the downstream node.

4. The relay device according to claim 2, wherein the control unit converts an IP address of the transmission destination information of a packet from the upstream node to the downstream node into an IP address of the downstream node.

5. The relay device according to claim 2, wherein the control unit converts a port number of the transmission destination information of a packet from the upstream node to the downstream node into a port number of the downstream node in accordance with an application operating on a most downstream node.

6. The relay device according to claim 2, wherein the control unit converts an IP address of the transmission source information of a packet from the downstream node to the upstream node into an IP address of the relay device.

7. The relay device according to claim 2, wherein the control unit converts a port number of the transmission source information of a packet from the downstream node to the upstream node into a port number of the relay device in accordance with an application operating on a most downstream node.

8. The relay device according to claim 1, wherein the control unit identifies whether a packet to be relayed is a packet from the upstream node to the downstream node or a packet from the downstream node to the upstream node.

9. The relay device according to claim 1, wherein a packet data network gateway (P-GW) converts the transmission destination information or the transmission source information of the packet on a basis of a second conversion table of address information stored by the P-GW.

10. The relay device according to claim 9, wherein the second conversion table includes information in which address information of a most downstream node is associated with address information of the relay device corresponding to the most downstream node.

11. The relay device according to claim 9, wherein the control unit transmits a message requesting registration of the second conversion table to the P-GW.

12. The relay device according to claim 1, wherein each node from a base station to a P-GW stores a routing table in which the transmission destination information is associated with a transfer destination, and relays the packet on a basis of the routing table.

13. The relay device according to claim 1, wherein an MME stores a management table in which identification information and address information of a node attached to a network are associated with address information of an upstream node of the node.

14. The relay device according to claim 1, wherein the control unit receives allocation of a prefix of an IP address from a P-GW in a case where the IP address is not acquired.

15. The relay device according to claim 1, wherein the control unit transmits information indicating placement of a moving cell formed by the relay device.

16. The relay device according to claim 1, wherein the control unit controls a transmission timing of an attach request related to the attached downstream node.

17. The relay device according to claim 16, wherein the control unit collectively transmits the attach request related to one or more attached downstream nodes, to the upstream node.

18. A terminal device comprising:
a control unit configured to transmit a message requesting an upstream node which converts transmission destination information or transmission source information of a packet to be relayed, on a basis of a stored first conversion table of address information, to register the first conversion table.

19. A communication method comprising:
storing a first conversion table of address information; and
converting and relaying, by a processor, transmission destination information or transmission source information of a packet transmitted and received between an upstream node of a connection destination and a downstream node of a subordinate on a basis of the stored first conversion table.

20. A communication method comprising:
transmitting, by a processor, a message requesting an upstream node which converts transmission destination information or transmission source information of a packet to be relayed, on a basis of a stored first conversion table of address information, to register the first conversion table.
